(19) Europäisches Patentamt / European Patent Office / Office européen des brevets

(11) **EP 4 443 253 B1**

(12) **EUROPEAN PATENT SPECIFICATION**

(45) Date of publication and mention
of the grant of the patent:
**20.05.2026 Bulletin 2026/21**

(21) Application number: **22900830.5**

(22) Date of filing: **30.05.2022**

(51) International Patent Classification (IPC):
*G05B 19/418* (2006.01)   *G06Q 50/04* (2012.01)
*G06Q 10/0631* (2023.01)   *G06Q 10/0637* (2023.01)

(52) Cooperative Patent Classification (CPC):
**G06Q 10/06; G06Q 10/063114; G06Q 10/06312;
G06Q 10/06316; G06Q 10/06375; G06Q 10/067;
G06Q 50/04; G06V 20/52;** Y02P 90/30

(86) International application number:
**PCT/JP2022/021955**

(87) International publication number:
**WO 2023/100394 (08.06.2023 Gazette 2023/23)**

(54) **PROGRESS MANAGEMENT DEVICE, SYSTEM, AND METHOD**

FORTSCHRITTSVERWALTUNGSVORRICHTUNG, -SYSTEM UND -VERFAHREN

DISPOSITIF, SYSTÈME ET PROCÉDÉ DE GESTION DE PROGRESSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.11.2021 JP 2021194793**

(43) Date of publication of application:
**09.10.2024 Bulletin 2024/41**

(73) Proprietor: **Panasonic Intellectual Property
Management Co., Ltd.
Kadoma-shi, Osaka 571-0057 (JP)**

(72) Inventors:
• **MURATA, Shumma
Kadoma-shi, Osaka 571-0057 (JP)**
• **TANAKA, Akihiro
Kadoma-shi, Osaka 571-0057 (JP)**

(74) Representative: **Grünecker Patent- und
Rechtsanwälte
PartG mbB
Leopoldstraße 4
80802 München (DE)**

(56) References cited:
WO-A1-2020/217381     WO-A1-2020/217381
JP-A- 2012 014 386     JP-A- 2012 168 873
JP-A- H03 117 543      JP-A- H05 128 123
US-A1- 2020 193 337

## Description

### TECHNICAL FIELD

The present disclosure relates to a progress management device, system, and method for simulating a progress status in a task.

### BACKGROUND ART:

Patent Document 1 discloses a work assist device for automatically applying improvement measures for effectively reducing burden imposed on an operator due to work. The work assist device collects information related to a production facility and information related to the operator performing the work in cooperation with the production facility in real time and evaluates a work burden degree indicating a degree of burden imposed on the operator due to the work from the information. The work assist device stores improvement measures (e.g., change of working speed, rearrangement of work procedure, as improvement measures whose target is an operator, change of the height of the work table, as an improvement measures whose target is a production facility, and the like) for improving the work burden degree, and performs simulation of estimating an estimated improvement effect indicating a degree of improvement of the work burden degree when the improvement measure is applied. The work assist device determines application improvement measure to be applied to at least one of the operator and the production facility from the stored improvement measure, based on the estimated improvement effect.

Patent Literature 2 discloses estimating work processes. The method uses machine learning based on plan information, sensor data from portable terminals carried by workers, machine operation logs, and progress status reflecting real-time work progress. When a process is delayed, the system generates a virtual plan by either shifting task times or adjusting durations. The virtual plan is generated for estimation of current and future task and it reflects how a worker is expected to proceed with tasks.

Patent Document 1: WO 2020/217381
Patent Document 2: US 2020/193337 A1

### SUMMARY

The present disclosure provides a progress management device, system, and method that can facilitate realizing improvement on a delay in task progress.

A progress management device according to an aspect of the present disclosure manages a progress status in implementing a task planned in advance. The progress management device includes a memory, a data obtainer, a controller, and an output interface. The memory stores plan data indicating a plan related to the task. The data obtainer acquires implementation data indicating a status in which the task is under implementation. The controller controls, based on the stored plan data and the acquired implementation data, simulation processing to simulate a predicted progress status in which the task is implemented after the status indicated by the implementation data. The output interface outputs information. The controller detects a delayed state in which the predicted progress status is delayed compared with the plan indicated by the plan data, the predicted progress status simulated in the simulation processing. The controller determines, based on a prediction result from the simulation processing for a case where a measure for improving the detected delayed state is applied, an application deadline to apply the measure to improve the delayed state. The controller causes the output interface to output presentation information including the determined application deadline.

These general and specific aspects may be implemented by a system, a method, a computer program, and a combination thereof.

According to the progress management device, system, and method in the present disclosure, it is possible to facilitate realizing improvement on a delay in task progress.

### BRIEF DESCRIPTION OF DRAWINGS

Fig. 1 is a diagram illustrating an overview of a progress management system according to a first embodiment of the present disclosure;
Fig. 2 is a block diagram illustrating a configuration of an analysis server in the progress management system;
Fig. 3 is a block diagram illustrating a configuration of a manager terminal in the progress management system;
Fig. 4 is a functional block diagram illustrating a functional configuration of the progress management system according to the first embodiment;

Figs. 5A to 5C are diagrams illustrating data structures of various types of data in the progress management system;

Figs. 6A to 6C are diagrams illustrating an operation of the progress management system;

Fig. 7 is a flowchart illustrating an operation of the analysis server;

Fig. 8 is a diagram illustrating a progress simulation in the progress management system;

Fig. 9 is a flowchart illustrating multiple times of progress simulation processing to obtain an application deadline;

Figs. 10A and 10B are diagrams illustrating an example of a method to calculate an estimated completion time;

Fig. 11 is a flowchart illustrating an operation according to a simulation result in the manager terminal of the progress management system;

Fig. 12 is a diagram illustrating a functional configuration of a progress management system according to a second embodiment;

Fig. 13 is a diagram illustrating a task unperformed period in the progress management system of the second embodiment;

Fig. 14 is a flowchart illustrating an operation calculating the task unperformed period in an analysis server of the second embodiment;

Fig. 15 is a diagram illustrating a functional configuration of a progress management system according to a third embodiment;

Fig. 16 is a diagram illustrating a standard task period in the progress management system of the third embodiment;

Fig. 17 is a flowchart illustrating an operation calculating the standard task period in an analysis server of the third embodiment; and

Fig. 18 is a diagram illustrating measures in a progress management system according to a modification.

DETAILED DESCRIPTION

Hereinafter, embodiments will be described in detail with reference to the drawings as appropriate. However, a detailed description more than necessary may be omitted. For example, a detailed description of already well-known matters and a redundant description of substantially the same configuration may be omitted. This is to avoid the following description from becoming unnecessarily redundant and to facilitate understanding by those skilled in the art.

It should be noted that the applicant provides the accompanying drawings and the following description for a person skilled in the art to fully understand the present disclosure. Thus, the drawings and the description are not intended to limit the subject matter defined in the claims.

(First Embodiment)

1. Configuration

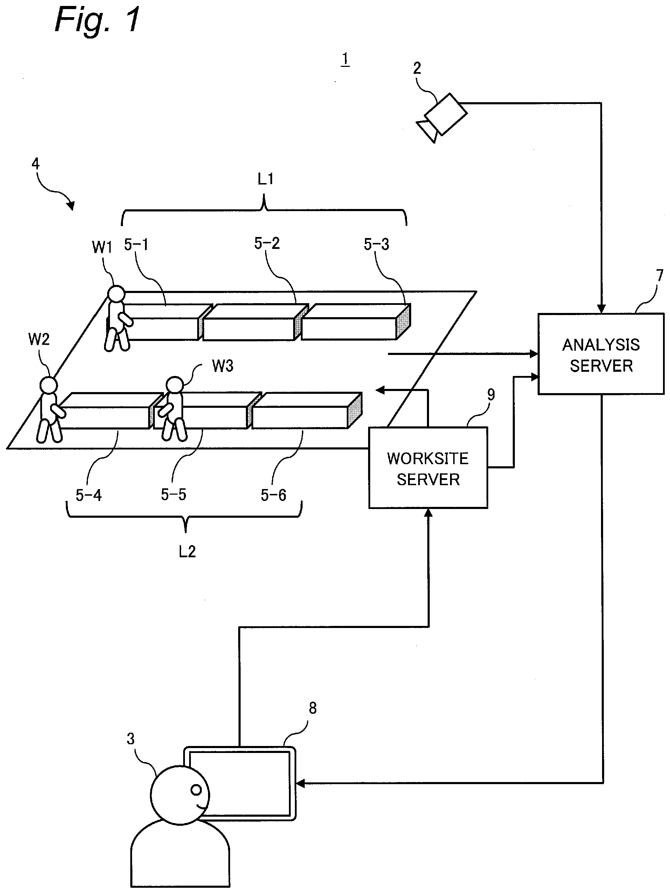

A progress management system according to a first embodiment, will be described with reference to Fig. 1. Fig. 1 is a diagram for illustrating an overview of a progress management system 1 according to the present embodiment.

1-1. Progress management system

The progress management system 1 of the present embodiment is applied to a use for managing a progress status in a task planned in advance, that is, a work process in a worksite 4 such as a factory, for example. For example, as shown in Fig. 1, the present system 1 includes a camera 2 that captures a worksite 4, and an analysis server 7 that collects and analyzes data in real-time, the data being collected from the camera 2 and the facilities 5-1 to 5-6 installed in the worksite 4. The present system 1 further includes a manager terminal 8 that presents an analysis result by the analysis server 7 to a manager 3 of the work process such as a supervisor of the worksite 4, and a worksite server 9 that performs various types of management control in the worksite 4, for example.

In the worksite 4 in Fig. 1, a work line L1 including the facilities 5-1, 5-2, and 5-3, and a work line L2 including the facilities 5-4, 5-5, and 5-6 are installed. Hereinafter, the facilities 5-1 to 5-6 are collectively referred to as a facility 5. Each facility 5 includes a sensor connected to transmit sensor data to the analysis server 7 via a communication network such as a LAN, for example. For example, the sensor is a proximity sensor, and generates sensor data including information on an object passing through each facility 5.

The camera 2 of the present system 1 is arranged to capture an image of an entire range in which the operators W1 to W3 move in the worksite 4. In the worksite 4, the camera 2 repeats a capturing operation at a predetermined cycle, for example, to generate image data showing a captured image. The camera 2 is connected to, for example, the analysis server 7 to transmit image data.

The analysis server 7 analyzes the received image data and sensor data with the task being implemented in the worksite 4 and performs simulation processing predicting the progress status in the work process. In the present system 1, when the progress status predicted in the simulation processing is in a delayed state compared with a task plan related to the work process, a delay notification indicating the delayed state, information indicating a simulation result and the like are transmitted from the analysis server 7 to the manager terminal 8, for example.

According to the present system 1, the manager 3 can consider measures for improving the delayed state by checking, at the manager terminal 8, the simulation result and the like received from the analysis server 7, for example.

The manager terminal 8 receives an operation determining one or more measures by the manager 3 and transmits information indicating the determined measures to the worksite server 9, for example. The worksite server 9 is configured to be data-communicable with an external apparatus such as the manager terminal 8 via a communication network, for example. The worksite server 9 may be connected with the facility 5 to transmit instruction data reflecting the measures in the work process under implementation in the worksite 4. The worksite server 9 may be configured to be further communicable with each terminal device to transmit instruction data to the terminal device such as a smartphone associated with each of the operators W1 to W3, for example.

In the present example, each facility 5 is used in a work process manufacturing a plurality of types of products in each of the work lines L1 and L2, and the operator W such as the operators W1, W2, and W3 performs tasks such as switching task switching the types of products to be manufactured in each of the work lines L1 and L2. Although two work lines L1 and L2 and six facilities 5 are illustrated in Fig. 1, the number of work lines of the worksite 4 is not limited to two, and the number of facilities 5 in each work line may be one, or four or more. A different number of facilities 5 may be included in each work line. The number of camera 2 and the number of operators W1 to W3 in the present system 1 are not limited to the numbers in this example, either.

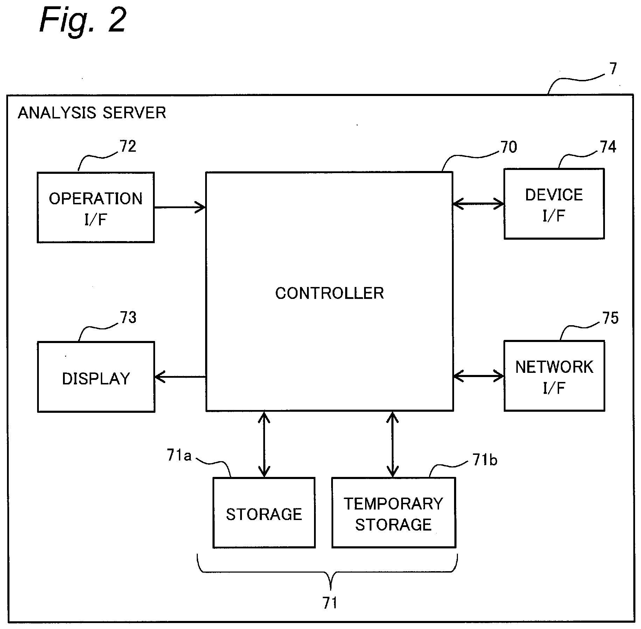

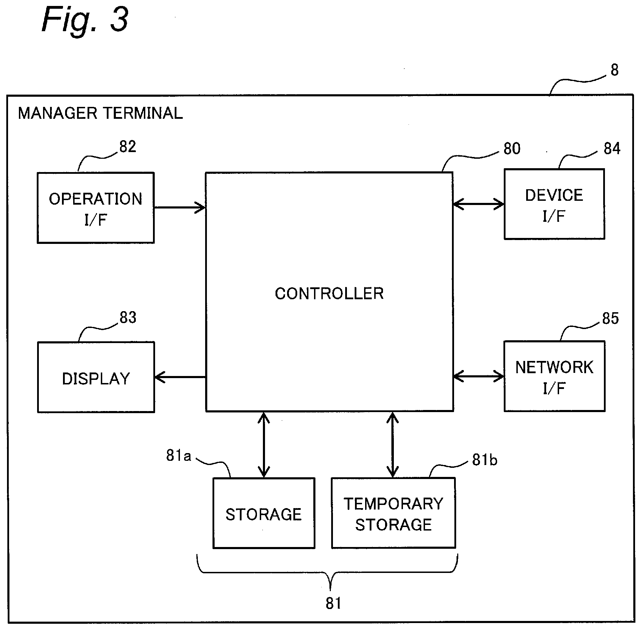

Hereinafter, specific configurations of the analysis server 7 and the manager terminal 8 in the present system 1 will be respectively described with reference to Figs. 2 and 3.

1-2. Configuration of analysis server

Fig. 2 is a block diagram illustrating a configuration of the analysis server 7. The analysis server 7 is composed of an information processing device such as a server computer, for example. The analysis server 7 is an example of the progress management device in the present embodiment. The analysis server 7 illustrated in Fig. 2 includes a controller 70, a memory 71, an operation interface 72, a display 73, a device interface 74, and a network interface 75. Hereinafter, the interface is abbreviated as "I/F".

The controller 70 includes a CPU or an MPU that implements a predetermined function in cooperation with software, for example. The controller 70 controls the entire operation of the analysis server 7, for example. The controller 70, reading data and programs stored in the memory 71, performs various types of arithmetic processing to implement various functions. The controller 70 may include various semiconductor integrated circuits such as a GPU.

The controller 70 performs a program including a command group for implementing the function of the analysis server 7, for example. The above program may be provided from a communication network or may be stored in a portable recording medium. In addition, the controller 70 may include an internal memory as a temporary storage area that holds various types of data and programs.

The controller 70 may be a hardware circuit such as a dedicated electronic circuit or a reconfigurable electronic circuit designed to implement each function described above. The controller 70 may include various semiconductor integrated circuits such as a CPU, an MPU, a GPU, a GPGPU, a TPU, a microcomputer, a DSP, an FPGA, and an ASIC.

The memory 71 is a storage medium that stores programs and data for implementing the functions of the analysis server 7. As shown in Fig. 2, the memory 71 includes a storage unit 71a and a temporary storage 71b.

The storage unit 71a stores parameters, data, control programs, and the like for implementing a predetermined function. The storage unit 71a includes a hard disk drive (HDD) or a solid-state drive (SSD), for example. For example, the storage unit 71a stores the above-described programs, various databases (DB) described below, and the like.

The temporary storage 71b is composed of a RAM such as a DRAM or an SRAM to temporarily stores (i.e., holds) data, for example. For example, the temporary storage 71b holds various types of data and the like such as image data and sensor data respectively received from the camera 2 and the facility 5. The temporary storage 71b may function as a work area of the controller 70, and may include a storage region in an internal memory of the controller 70.

The operation I/F 72 is a general term for operation members that receive an operation by a user. For example, the operation I/F 72 includes any one of a keyboard, a mouse, a trackpad, a touchpad, a button, a switch, and the like, or a combination thereof. The operation I/F 72 may constitute a touch panel together with the display 73. The operation I/F 72 acquires various types of information input by a user's operation.

The display 73 is composed of a liquid crystal display or an organic EL display, for example. The display 73 may display various types of information such as information input from the operation I/F 72 and various icons for operating the operation I/F 72. The display 73 may constitute an output interface that outputs various types of information in the analysis server 7.

The device I/F 74 is a circuit for connecting an external apparatus to the analysis server 7. The device I/F 74 performs communication according to a predetermined communication standard. The predetermined communication standard includes USB, HDMI (registered trademark), IEEE 1395, WiFi (registered trademark), Bluetooth (registered trademark), and the like. The device I/F 74 may constitute a communication interface connected to an external apparatus via a communication network such as the Internet. The device I/F 74 may constitute a data obtainer that receives various types of information from an external apparatus such as the camera 2 or an output interface that transmits various types of information to the external apparatus in the analysis server 7.

The network I/F 75 is a circuit for connecting the analysis server 7 to a communication network via a wireless or wired communication line. The network I/F 75 performs communication according to a predetermined communication standard. The predetermined communication standard includes IEEE 802.3, IEEE 802.11a/11b/11g/11ac, and the like. In the analysis server 7, the network I/F 75 may constitute a data obtainer that receives various types of information or an output interface that transmits various types of information via a communication network.

1-3. Configuration of manager terminal

Fig. 3 is a block diagram illustrating a configuration of the manager terminal 8. The manager terminal 8 is composed of an information processing device such as a tablet terminal. The manager terminal 8 in Fig. 3 includes a controller 80, a memory unit 81, an operation I/F 82, a display 83, a device I/F 84, and a network I/F 85.

The controller 80 includes, for example, a CPU or an MPU that implements a predetermined function in cooperation with software. The controller 80 controls the entire operation of the manager terminal 8, for example. The controller 80, reading data and programs stored in the memory unit 81, performs various types of arithmetic processing to implement various functions. The above program may be provided from a communication network such as the Internet, or may be stored in a portable recording medium.

The memory unit 81 is a storage medium that stores programs and data for implementing the functions of the manager terminal 8. As shown in Fig. 3, the memory unit 81 includes a storage unit 81a and a temporary storage 81b.

The storage unit 81a stores parameters, data, control programs, and the like for implementing a predetermined function. The storage unit 81a is composed of an HDD or an SSD, for example. For example, the storage unit 81a stores the above-described program, various data, and the like. The temporary storage 81b is composed of a RAM such as a DRAM or an SRAM, and temporarily stores various types of data such as data received from the analysis server 7, for example. The temporary storage 81b may function as a work area of the controller 80, and may include a storage region in an internal memory of the controller 80.

The operation I/F 82 is a general term for operation members that receive a user's operation, and may be configured similarly to the operation I/F 72 of the analysis server 7, for example. The operation I/F 82 may constitute a touch panel together with the display 83. The operation I/F 82 acquires various types of information input by a user's operation.

The display 83 is composed of a liquid crystal display or an organic EL display, for example. The display 83 may display various types of information such as information input from the operation I/F 82 and various icons for operating the operation I/F 82. The display 83 may constitute an output interface that outputs various types of information in the manager terminal 8.

The device I/F 84 is a circuit for connecting an external apparatus to the manager terminal 8. The device I/F 84 performs communication according to a predetermined communication standard similarly to the device I/F 74 of the analysis server 7, for example. The device I/F 84 may constitute a data obtainer that receives various types of information from the external apparatus in the manager terminal 8 or an output interface that transmits various types of information to the external apparatus, or may constitute a communication interface connected to the external apparatus via a communication network.

The network I/F 85 is a circuit for connecting the manager terminal 8 to a communication network via a wireless or wired communication line. The network I/F 85 performs communication conforming to a predetermined communication standard similarly to the network I/F 75 of the analysis server 7, for example. The network I/F 85 may be connected to the analysis server 7 via, for example, a communication network. In the manager terminal 8, the network I/F 85 may constitute a data obtainer that receives various types of information or an output interface that transmits various types of information via a communication network.

The configuration of the analysis server 7 and the manager terminal 8 as described above is an example, and is not limited to the above example. The progress management method in the present embodiment may be performed in distributed computing. In addition, the respective acquisition units in the analysis server 7 and the manager terminal 8 may be implemented in cooperation with various kinds of software in the controllers 70 and 80 and the like, respectively. The respective acquisition units may acquire various types of information by reading various types of information stored in various storage media (e.g., storage units 71a and 81a) to work areas (e.g., temporary storages 71b and 81b) of the controllers 70 and 80, respectively.

1-4. Functional configuration of progress management system

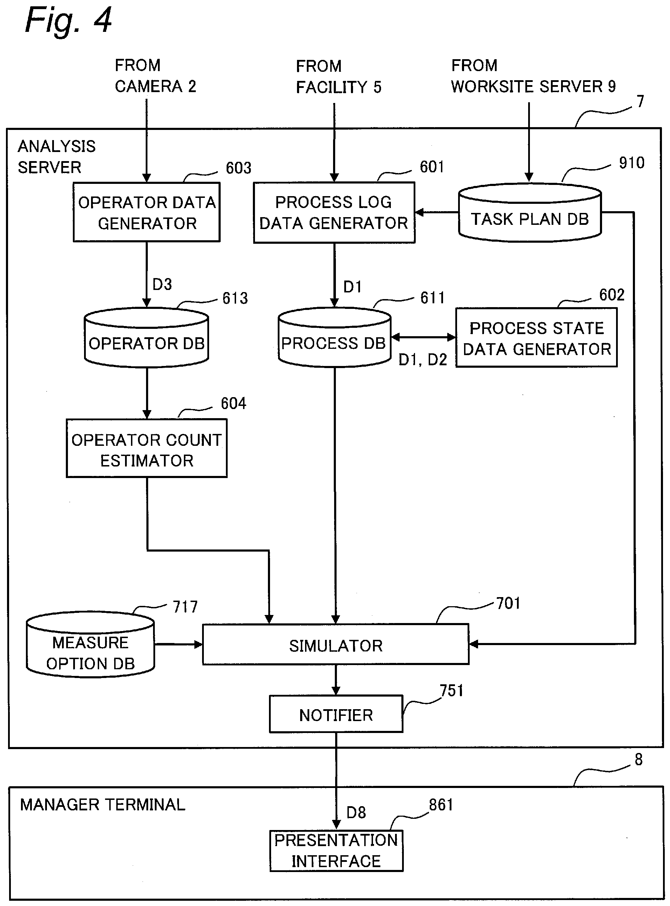

A functional configuration of the progress management system 1 including the analysis server 7 and the manager terminal 8 as described above will be described with reference to Fig. 4. Fig. 4 is a functional block diagram illustrating the functional configuration of the progress management system 1 according to the first embodiment.

The analysis server 7 includes a process log data generator 601, a process state data generator 602, an operator data generator 603, a simulator 701, and a notifier 751 configured in the controller 70, for example. The analysis server 7 further includes, a task plan DB 910, a process DB 611, an operator DB 613, and a measure option DB 717 configured in the storage 71a, for example. The task plan DB 910 stores, for example, data indicating a task plan, the data being acquired from the worksite server 9 via the network I/F 75 or the like.

The process log data generator 601, referring to the task plan DB 910, generates process log data D1 described below based on sensor data received from the facility 5 as needed, for example. The process DB 611 accumulates process log data D1 generated in association with time. The process state data generator 602 generates process state data D2 indicating a state in the work process changing in time series based on the process log data D1 up to the latest time accumulated in the process DB 611. The process state data D2 is stored in the process DB 611, for example.

The operator data generator 603 applies the image recognition technology to the image data received from the camera 2 to recognize the positions of the operators W1 and W2 in the worksite 4, thereby generating operator data D3 indicating the positions of the operators W1 and W2 at each time. The operator DB 613 stores the generated operator data D3. An operator count estimator 604 sequentially calculates an estimated value of an operator count indicating the number of operators W at each time for each work area (described below) corresponding to each facility 5, for example, based on the operator data D3 of the operator DB 613. Each of the data D1 to D3 is an example of implementation data in the present embodiment.

The simulator 701 acquires the process log data D1, the process state data D2, and the estimated operator count calculated by the operator count estimator 604, as needed. The simulator 701, referring to the task plan DB 910, performs simulation processing of the progress status based on each of the data D1 to D3, for example. The simulator 701 detects the delayed state of the progress status predicted in the simulation processing by comparison with the task plan.

The measure option DB 717 stores data indicating an option for each measure applicable to the facility 5 or the operator W in order to improve the delayed state in the worksite 4. When detecting the delayed state, the simulator 701, referring to the measure option DB 717, performs simulation processing for a case where one or more measures are applied in the worksite 4.

For example, when the delayed state is detected, the notifier 751 controls the network I/F 75 to transmit the delay notification and presentation data D8 to the manager terminal 8. The presentation data D8 includes information on measures and various simulation results by the simulator 701.

The manager terminal 8 includes a presentation interface 861 that displays the delay notification and the presentation data D8 received from the analysis server 7. In addition, the presentation interface 861 receives an operation by the manager 3 to determine a measure included in the presentation data D8. The presentation interface 861 may be composed of a display or the like layered on a touch panel configured in the operation interface 82 and the display 83, for example.

In the above example, an example is described in which the process log data generator 601 generates the process log data D1 using data in the task plan DB 910. However, when the types of products or the like can be differentiated based on the sensor data, the process log data D1 may be generated only from the sensor data. The process log data generator 601, the process state data generator 602, and the operator data generator 603 are not limited to be performed by one processor, and may be performed by different processors respectively or may be performed by two processors in any combination. Some or all of the respective generators 601 to 603 may be provided in an information processing device different from the analysis server 7. In addition, in the analysis server 7, the notifier 751 may include the display 73 to display the presentation data D8.

1-5. Various data structures

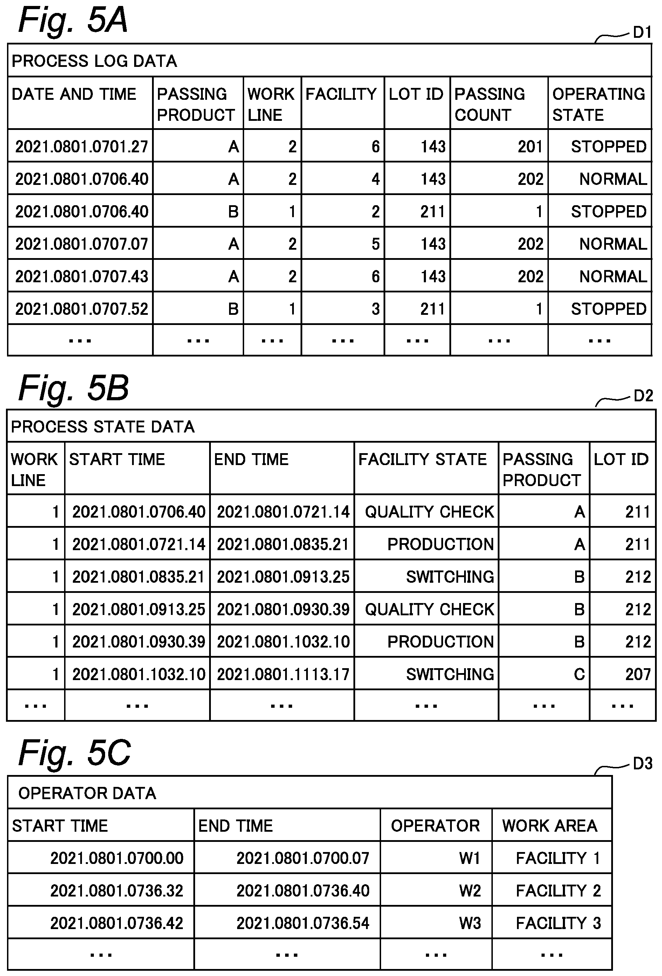

In the progress management system 1 of the present embodiment, the process log data D1, the process state data D2, and the operator data D3 are managed in real time in the analysis server 7 as described above. An example of data structures of the various types of data D1 to D3 will be described with reference to Figs. 5A to 5C.

Figs. 5A to 5C are diagrams illustrating data structures of various types of data D1 to D3 in the present system 1. Fig. 5A illustrates a data structure of the process log data D1. Fig. 5B illustrates a data structure of the process state data D2. Fig. 5C illustrates a data structure of the operator data D3.

The process log data D1 illustrated in Fig. 5A manages "date and time", "passing product" indicating a type of a product passing through each facility 5, "work line", "facility", "lot ID" identifying a production unit of the product, "passing count", and "operating state" of the facility 5, in association with each other. The type of the product indicates a model or the like, for example.

For example, "1" to "6" in the "facility" respectively indicate the facilities 5-1 to 5-6 in which a passing product is detected by the sensor among the facilities 5 in the worksite 4, and "1" or "2" in the "work line" indicates any one of the work lines L1 and L2 including the facilities where the passing product is detected. The "passing count" indicates the total number of products passing through the facility 5 in the "facility" column before a time in the "date and time" column. The total number of products is counted for the type in the "passing product" column, by addition from the process log data D1 in the past time, for example. The "operating state" indicates a normal state or a stopped state for the facility 5 in the "facility" column at the time.

The process log data D1 in Fig. 5A indicates that a product of a type "A" (also referred to as a "product A", the same applies hereinafter) passes through the facility "6" in the work line L2, that is, the facility 5-6 at the date and time "2021.0801.0701.27", for example. The process log data D1 in Fig. 5A further stores, for the above date and time, values each indicating the lot ID "143" of the passed product A, the total number (i.e., passing count) "201" of the products A passed through the facility 5-6, and the stopped state as the operating state of the facility 5-6.

The process state data D2, which is generated based on the process log data D1 described above, manages the "work line", "start time" and "end time" of a state in the work process, "facility state", the "passing product", and the "lot ID" in association with each other, as shown in Fig. 5B, for example.

The "facility state" in the process state data D2 indicates a task performed in a period from the "start time" to the "end time" in the facility 5 included in the work line L1 or L2. The "facility state" corresponds to a state in the work line L1 or L2 of the work process, for example. In the example in Fig. 5B, the "facility state" includes each state of "quality confirmation" verifying quality of parts and the like before production of a product, "production" producing a product, and "switching" changing the types of products to be produced.

The process state data D2 in Fig. 5B indicates that, regarding the work line L1, the switching task changing the product to be produced from the product A to a product B is performed in a period from the start time "2021.0801.0835.21" to the end time "2021.0801.0913.25", for example. The process state data D2 in the present example further indicates that the product B with the lot ID "212" is produced in the subsequent period. Before the quality confirmation of the product A, the switching task may be performed, the switching task switching from a state at the start of an operation in the worksite 4 to the production of the product A, for example.

In the worksite 4 of the present example, in the process state data D2, a task at a time when the facility state of the facility 5 is "switching" (i.e., switching task) is manually performed by the operator W. On the other hand, a task at a time when the facility state of the facility 5 is "production" (i.e., production task) does not involve the manual task by the operator W.

The operator data D3 illustrated in Fig. 5C manages a period from the "start time" to the "end time", the "operator" indicating the operators W1 to W3, and the "work area" associated with each facility 5 in the worksite 4, in association with each other. The "work area" is set in advance as a predetermined range in which a task related to each facility 5 is performed in the worksite 4, for example. The analysis server 7 may store, in the storage unit 71a, map data indicating the arrangement or the like of the facility 5 in the worksite 4 in a predetermined coordinate system, and may cause the operator data generator 603 to generate the operator data D3 using the map data, for example.

The operator data D3 in Fig. 5C indicates that the operator W1 stays in the work area corresponding to the facility "1", that is, the facility 5-1 in a period from the start time "2021.0801.0700.00" to the end time "2021.0801.0700.07", for example. Based on such operator data D3, the operator count estimator 604 in Fig. 4 calculates the estimated operator count for each facility 5 at each time, for example.

2. Operation

The operation of the progress management system 1 configured as described above will be described below.

2-1. Overview of operation

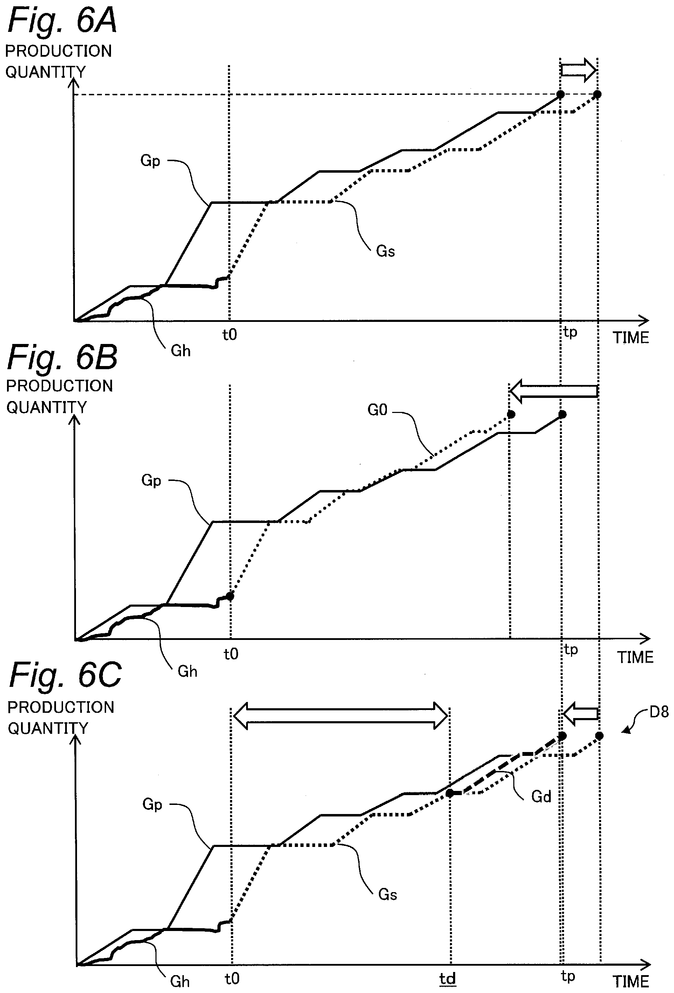

An overview of an operation of the analysis server 7 in the progress management system 1 of the present embodiment will be described with reference to Figs. 6A to 6C. Figs. 6A to 6C are diagrams illustrating an operation of the progress management system 1 of the present embodiment.

Fig. 6A shows an example of progress simulation by the analysis server 7 of the present system 1. The progress simulation is simulation processing predicting a progress status in real time under implementation of the task in the worksite 4. In the progress simulation, the analysis server 7 calculates a predicted value of a production quantity in time series, for a time after a current time t0 in a predetermined period such as one day, as shown in Fig. 6A, for example. The production quantity indicates a cumulative value of the number of products produced from a start of the production to each time, for each of the work lines L1 and L2 in the worksite 4, for example.

Fig. 6A includes various graphs Gp, Gh, and Gs indicating temporal change in the production quantity for one work line L1. The graph Gp indicates the production quantity planned in the task plan. The graph Gh indicates an actual value of the production quantity actually produced in the worksite 4 by the current time t0. The graph Gs indicates a predicted value of the production quantity after the current time t0.

The present system 1 monitors whether or not the progress status in the worksite 4 is predicted to be in the delayed state by sequentially performing the progress simulation, for example. In the example in Fig. 6A, a completion time of the graph Gs predicted in the progress simulation is later than a planned completion time tp at which the work process is completed in the graph Gp of the task plan, which is detected as the delayed state.

When detecting the delayed state as shown in Fig. 6A, the analysis server 7 searches for a measure that can resolve the delayed state by tentatively applying various measures in the measure option DB 717 to the progress simulation, for example. Fig. 6B shows a graph G0 of such a search result in addition to the graph Gp in Fig. 6A. The graph G0 indicates a predicted value of the production quantity calculated by the progress simulation in which applying the measure at the current time t0 is assumed.

In the graph G0 of the tentative prediction illustrated in Fig. 6B, the work process is completed earlier than the planned completion time tp, and it can be seen that the delayed state can be resolved by the measure. However, the completion time in the graph G0 of the tentative prediction is excessively earlier than the planned completion time tp. In the actual worksite 4, although it is difficult for the manager 3 and the like to immediately apply the measure at the time when the measure is presented, it may be easy to apply the measure after a slight period from the time of presentation. In this case, it may be useful for the manager 3 and the like to have information about how much period to spare before applying the measure, that is, by when the measure is applied to resolve the delayed state.

Therefore, the progress management system 1 of the present embodiment identifies, by the progress simulation for a case where an application time of the measure is further changed, an application deadline indicating the latest time among the application times at which the delayed state can be resolved by the measure. Then, the present system 1 includes the application deadline of such measures in the presentation data D8 and presents information to the manager 3.

Fig. 6C illustrates the presentation data D8 according to the present system 1. In addition to the respective graphs Gp, Gh, and Gs in Fig. 6A, the presentation data D8 in the present example presents an application deadline td of the measure and a graph Gd indicating a result of the progress simulation for a case where the measure is applied to the application deadline td.

According to the presentation data D8 of the present system 1, a grace period from the current time t0 to the application deadline td for the identified measure is visualized (Fig. 6C), and it is possible to reduce a load when the manager 3 or the like implements the measure in the worksite 4. It is further possible to avoid wasted efforts that may occur when the measure is forced to be immediately applied at the current time t0 even though a margin is left before the application deadline td. As described above, according to the present system 1, it is possible to facilitate realizing improvement on the delayed state in the worksite 4.

2-2. Operation of analysis server

The operation of the analysis server 7 in the progress management system 1 will be described with reference to Figs. 4, 6A to 6C, and 7.

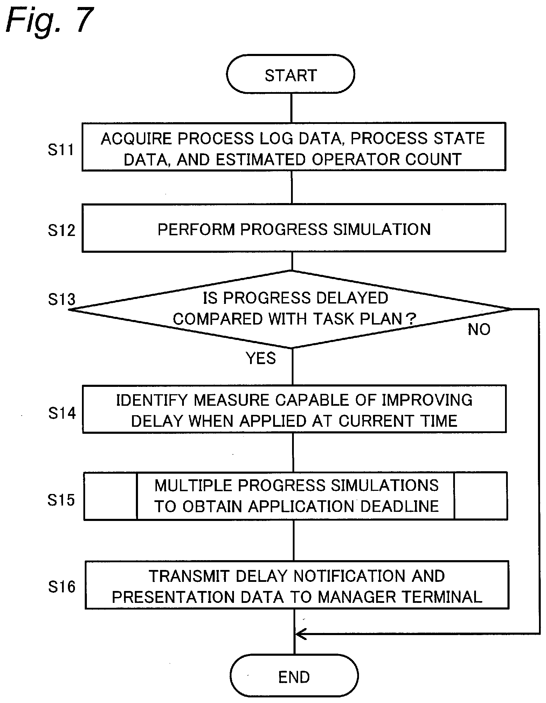

Fig. 7 is a flowchart illustrating an operation of the analysis server 7 in the present embodiment. The processing shown in the flowchart in Fig. 7 is performed by the controller 70 functioning as the simulator 701, for example. The processing of the present flowchart is repeatedly performed at a predetermined cycle (e.g., at intervals of one minute) for each of the work lines L1 and L2 in the worksite 4, for example. Hereinafter, an example will be described in which the processing of the present flowchart is performed on the work line L1.

First, the controller 70 acquires the process log data D1, the process state data D2, and the estimated operator count from the respective DBs 611 and 910 and the operator count estimator 604 in Fig. 4, for example (S11). The controller 70 may extract data to be processed related to the work line L1, from the data D1 and D2 and data of the estimated operator count stored in the temporary storage 71b, for example.

Next, the controller 70 performs a progress simulation of the work process, based on the acquired data D1 and D2 and the estimated operator count (S12). For example, as shown in Fig. 6A described above, the controller 70 calculates a predicted value of the production quantity for each time after the current time t0. Details of the progress simulation will be described below.

The controller 70 compares the completion time of the work process predicted by the progress simulation processing (S12), that is, an estimated completion time, with the planned completion time to determine whether or not the predicted progress status is in a delayed state compared with the task plan (S13). The controller 70 determines whether or not the progress status is in the delayed state, according to whether or not the estimated completion time is later than the planned completion time.

When the progress status is in the delayed state (YES in S13), the controller 70 searches for a measure that can resolve the delayed state by performing, for each measure in the measure option DB 717, a progress simulation assuming that the measure is applied at the current time t0. For example, as shown in Fig. 6B, the controller 70 identifies a measure whose estimated completion time in the progress simulation assuming the application of the measure is earlier than the planned completion time tp, among the respective measures described above (S14).

In the present embodiment, as a measure capable of resolving the delayed state, a measure adding one operator W to the work line L1 from another work line L2 is identified, for example. In step S14, the controller 70 may refer to the result of the progress simulation (S12) performed for the work line L2, and may adopt the measure when the estimated completion time is earlier than the planned completion time, for example.

Here, in the respective graphs Gp, Gh, and G0 in Fig. 6B, the period in which the production quantity increases corresponds to the period in which the facility state in the process state data D2 in Fig. 5B is "production". In the respective graphs Gp, Gh, and G0, a period in which the production quantity is constant corresponds to a period in which the facility state in the process state data D2 is "switching". In the graph G0 with the above measure being applied at the current time t0, after the current time t0, since the period of the switching task is shortened by increasing the number of operators, the period in which the production quantity is constant is shortened, and the delay of the progress is resolved. The period in which the facility state of the process state data D2 is "quality confirmation" may be included in a period of switching from a type produced immediately before, for example.

When identifying a measure that can be applied at the current time t0 to resolve the delayed state (S14), the controller 70 performs multiple times of the progress simulation with different application times of the measure in order to estimate the application deadline td (S15). When a plurality of measures are identified in step S14, the controller 70 performs multiple times of progress simulation processing (S15) to obtain the application deadline td for each measure. Details of the processing in step S15 will be described below.

The controller 70 generates presentation data D8 as shown in Fig. 6C, and transmits the delay notification and presentation data D8 to the manager terminal 8 via the network I/F 75, for example (S16).

After transmitting the presentation data D8 and the like (S16), the controller 70 ends the processing of the present flowchart.

According to the above processing, when detecting the delayed state in the progress status in the progress simulation (S12) (YES in S13), the analysis server 7 identifies a measure capable of resolving the delayed state (S14) and obtains the application deadline td of the measure (S15). Therefore, the application deadline td of the measure can be included in the presentation data D8, the measure being able to improve the current state in which the delayed state occurs.

In the above processing, after the transmission of the presentation data D8 and the like (S16), the processing of the next cycle may be performed after the operation by the manager 3, who determines measures, is input in the manager terminal 8, for example. In a progress simulation (S14) in which measures are applied at the current time t0, when the estimated completion time is later than or coincident with the planned completion time, the controller 70 may proceed to step S16 without performing step S15, for example.

When a plurality of measures is identified to be capable of resolving the delayed state in the measure option DB 717, the presentation data D8 including the application deadline td and various graphs for each measure may be generated and transmitted in step S16, for example.

2-3. Progress simulation

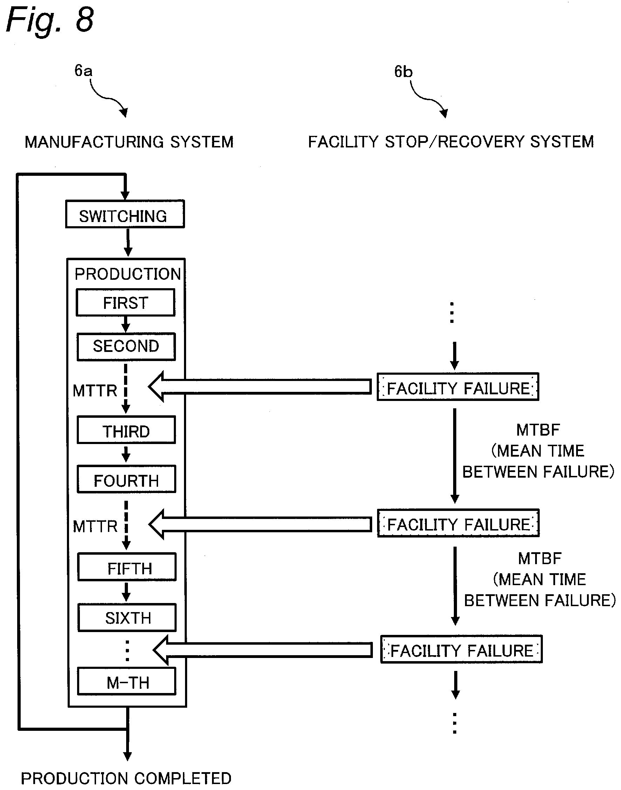

Details of the progress simulation (S12, S14, and S15) in the analysis server 7 of the present embodiment will be described with reference to Fig. 8.

Fig. 8 is a diagram illustrating the progress simulation in the progress management system 1. In the analysis server 7, the controller 70 performs, as the simulator 701, discrete event simulation that reproduces a process manufacturing products in the worksite 4, stopping and recovering the facility 5, for example.

In the discrete event simulation, numerical calculation is performed for reproducing an actual process as a system in which a state changes due to an event occurring at discrete time points on a time axis is performed. The discrete event simulation is performed by repeating the following steps (s1) to (s3) using a state variable and an event list, the state variable indicating the state in such a virtual system, the event list registering events that can occur in the system and time in association with each other, for example. Each event stochastically occurs by random numbers, for example.

(s1) A time in the simulation (hereinafter, referred to as "simulation time") is advanced to a time at which the next event occurs in the event list.

(s2) All events that can occur at the advanced time are acquired from the event list.

(s3) The processing defined in advance is performed on each event, a state in the system (i.e., the state variable) is changed, and an event that newly occurs at a later time along with the occurrence of the event is registered in the event list.

In the analysis server 7 of the present embodiment, the progress simulation is performed by a manufacturing system 6a corresponding to a product manufacturing process and a facility stop/recovery system 6b corresponding to a process stopping and recovering the facility 5, for example. Each of the systems 6a and 6b starts from the start time of the simulation processing, that is, from the current time t0, for example. In both the systems 6a and 6b, the event occurring in the manufacturing system 6a may change according to the state of the facility 5 in the facility stop/recovery system 6b, for example.

In the manufacturing system 6a, a state change is repeated in response to production of a product for each type and switching of the type to be produced, for example. The controller 70 repeatedly performs the following steps (a1) to (a3) in the manufacturing system 6a, until all types of products in the task plan are produced, for example.

(a1) A predetermined switching period according to the number of operators is caused to elapse.

(a2) The simulation time is caused to elapse by the amount of a takt time of one product.

(a3) Step (a2) is repeated for the planned number of pieces (M pieces in the example in Fig. 8) in the task plan.

In the present embodiment, the predetermined switching period is set in advance, for each type of product in the task plan, as a switching task period for switching to production of another type, for example. The predetermined switching period in the present embodiment is set for each expected number of operators in advance with respect to switching task between various types, for example. In step (a1) described above, the controller 70 causes a predetermined switching period to elapse according to the estimated operator count acquired in step S11 in Fig. 7, for example. When a time point of performing the progress simulation is within a period of the production task, the simulation of the manufacturing system 6a may be performed from the above step (a2).

In the facility stop/recovery system 6b, a change in the state is repeated in response to stop due to abnormality of the facility 5 and restart due to recovery task of the facility 5 in the worksite 4 is repeated, for example. The recovery task includes a manual task by the operator W, for example. The controller 70 repeatedly performs the following steps (b1) to (b2) in the facility stop/recovery system 6b, until the operation of the manufacturing system 6a ends, that is, until all types of products in the task plan are manufactured in the manufacturing system 6a, for example.

(b1) The simulation time is caused to elapse for a mean time between failures (MTBF).

(b2) The simulation time is caused to elapse for a mean time to recovery (MTTR).

The periods of MTBF and MTTR are each set in advance in the analysis server 7 from a statistical value such as an average of the respective periods in the past process state data D2, for example. After the MTBF period passes in the above step (b1), when the simulation time is within the period of production task by the facility 5 in the manufacturing system 6a, the controller 70 stops performing the above steps (a2) and (a3). After the MTTR period passes in step (b2), the controller 70 changes the state of the facility 5 in the manufacturing system 6a to the normal state.

The controller 70 of the analysis server 7 performs the progress simulation processing by changing the state in the manufacturing system 6a and the facility stop/recovery system 6b as described above by the program and various types of data stored in the storage unit 71a, for example.

2-4. Multiple times of progress simulation processing to obtain an application deadline

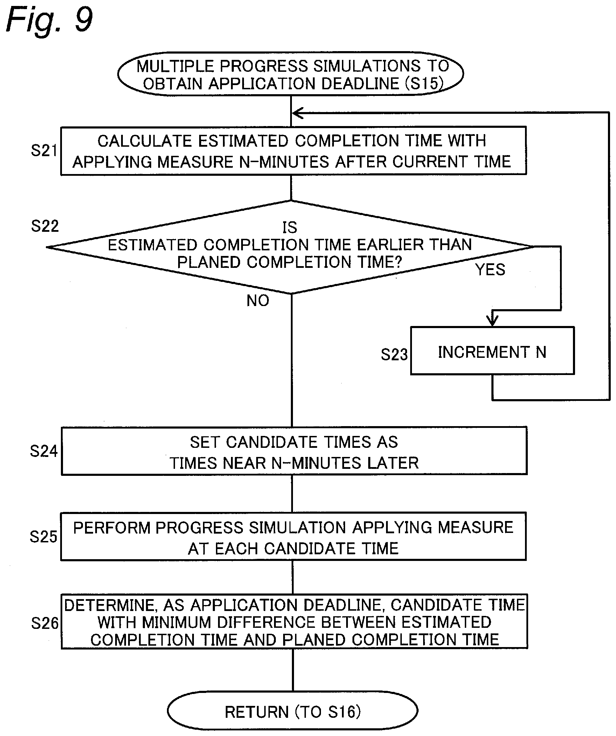

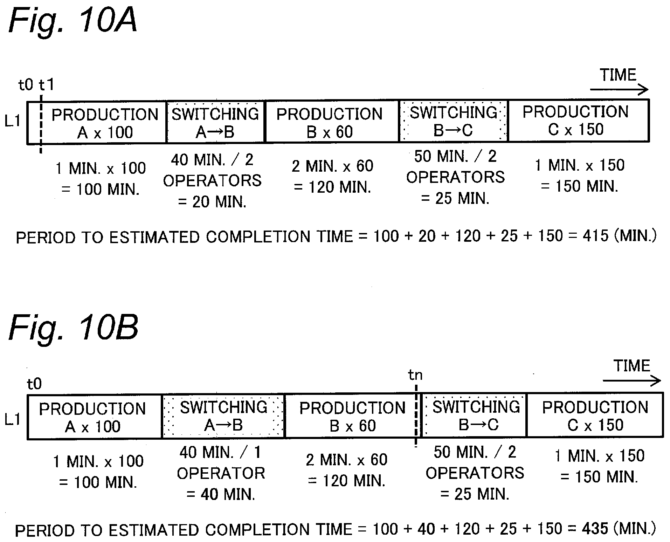

Details of the progress simulation processing in step S15 in Fig. 7 will be described with reference to Figs. 9, 10A, and 10B.

Fig. 9 is a flowchart illustrating multiple times of progress simulation processing (S15) to obtain an application deadline. The processing of the present flowchart is started when a measure that can improve the delayed state by being applied at the current time t0 is identified (S14) from the measure option DB 717, for example.

First, the controller 70 of the analysis server 7 calculates an estimated completion time for a case where the measure is applied N minutes after the current time t0 (S21). N is a variable for obtaining an application deadline, and has a positive initial value, for example. In step S21, the controller 70 calculates the time at which the work process is estimated to be completed, that is, the estimated completion time by a simple calculation different from the progress simulation, based on the task plan and information of the measure to be applied, for example. A method to calculate the estimated completion time will be described below in detail.

Next, for example, the controller 70 refers to the task plan DB 910 to determine whether or not the calculated estimated completion time is earlier than the planned completion time (S22).

When the estimated completion time is earlier than the planned completion time (YES in S22), the controller 70 increases N by a predetermined value (e.g., 1 minute) (S23), and calculates again the estimated completion time for a case where the measure is applied N minutes after the current time t0 using the increased N (S21). The controller 70 repeats the processing of steps S21 to S23 until the calculated estimated completion time is later than the planned completion time or coincides with the planned completion time (NO in S22).

When the calculated estimated completion time is not earlier than the planned completion time (NO in S22), the controller 70 sets, as candidate times of the application deadline td of the measure, times near N minutes after the current time t0 (S24). The nearby times are set to five pieces of time of N minutes, N $\pm$ 10 minutes, and N $\pm$ 20 minutes after the current time t0, for example.

The controller 70 performs a progress simulation when the measure is applied at each set candidate time by processing similar to step S14 in Fig. 7, for example (S25).

The controller 70 calculates a difference between the estimated completion time in the progress simulation and the planned completion time for each candidate time to determine, as the application deadline td of the measure, a candidate time at which the difference is minimized (S26).

When determining the application deadline td (S26), the controller 70 ends the processing of the present flowchart and proceeds to step S16 in Fig. 7.

According to the above processing, until the estimated completion time coincides with the planned completion time or exceeds the planned completion time (NO in S22), the calculation of the estimated completion time deferring the application time of the measure from the current time t0 (S21, S23) is repeated using a simple calculation. Then, candidate times are set near the obtained estimated completion time (S24), and by performing the progress simulation in the case of applying the measure at each candidate time (S25), the application deadline td is accurately determined (S26).

Figs. 10A and 10B are diagrams illustrating an example of a method to calculate the estimated completion time. Fig. 10A shows an example in which a measure is applied at a time t1 after the current time t0 in the calculation of the estimated completion time (S21 in Fig. 9). Fig. 10B shows an example in which the same measure is applied at a time tn that is after the time in Fig. 10A. As in the example in Figs. 6A to 6C, Figs. 10A and 10B show an example in which the operator count in the work line L1 is increased by applying the measure, and the operator count is changed from 1 to 2.

The task plan in the example in Figs. 10A and 10B is completed by producing 100 pieces of product A, then switching to the production of product B to produce 60 pieces, and further switching to the production of product C to produce 150 pieces. As described above, for each of the products A to C, the production task and the switching task are repeated until the number of pieces planned to be produced in the task plan (hereinafter, referred to as "planned number of pieces") is produced.

In the calculation of the estimated completion time (S21 in Fig. 9), the controller 70 calculates each period of the production task and the switching task. The period of the production task for each of the products A to C is calculated, based on the task plan, by multiplying the takt time by the production number of pieces in the task plan, the takt time being set in advance as a period taken for the production of one piece for each of the products A to C, for example. In Figs. 10A and 10B, for example, the period "100 minutes" of the production task of the product A is calculated from the takt time "1 minute" of the product A and the planned number of pieces "100 pieces" of the product A in the task plan.

The period of the switching task is calculated by dividing a predetermined switching period by the operator count in the work line L1, the predetermined switching period being a period in which the number of operators is "1" and being based on the task plan, for example. For example, in the task plan, the controller 70 determines the number of operators in each switching period according to the number of operators set in advance for the work line L1 and according to whether or not to apply the measure.

In the example in Fig. 10A, since the measure is applied at the time t1, that is N = 1 minute after the current time t0, the period of the switching task from the product A to the product B is calculated to be "20 minutes", based on the predetermined switching period "40 minutes" and the operator count "2 operators". On the other hand, in the example in Fig. 10B, no measure is applied at the time of the switching task, and the period of the switching task is calculated as "40 minutes". By such a simple calculation, the estimated completion time is calculated to be 415 minutes after the current time t0 in Fig. 10A, and is calculated to be 435 minutes after the current time t0 in Fig. 10B (S21).

As described above, the calculation of the estimated completion time is repeated while deferring the application time of the measure within a range before the planned completion time by the simple calculation without using the progress simulation, and the candidate time is set near the planned completion time (S21 to S24).

Therefore, the progress simulation only needs to be performed for the candidate times of the application deadline td (S25), and a processing load for the progress simulation in obtaining the application deadline td can be reduced (S26). The processing time for presenting the improvement measure by the analysis server 7 can also be shortened, since the number of executions of the progress simulation can be reduced.

2-5. Operation to determine a measure

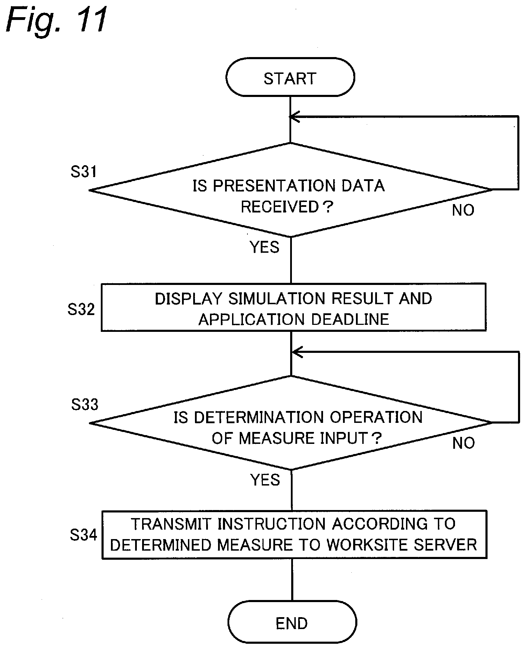

In the progress management system 1 of the present embodiment, the presentation data D8 is transmitted to the manager terminal 8 by performing the progress simulation as described above in the analysis server 7 (S16 in Fig. 7). The operation of the manager terminal 8 according to the presentation data D8, which is transmitted from the analysis server 7, and a determination operation of a measure by the manager 3 will be described with reference to Fig. 11.

Fig. 11 is a flowchart illustrating an operation according to a simulation result in the manager terminal 8. The processing shown in the present flowchart is performed in the manager terminal 8 by the controller 80 controlling the presentation interface 861, for example.

First, the controller 80 determines whether or not the presentation data D8 is received from the analysis server 7 (S31).

When the presentation data D8 is not received (NO in S31), the controller 80 repeats the determination in step S31 at a predetermined cycle such as the execution cycle of the processing in Fig. 7 until the presentation data D8 is received, for example.

When the presentation data D8 is received (YES in S31), the controller 80 causes, the presentation interface 861 to display the result of the progress simulation in the presentation data D8 and the application deadline td of the measure as shown in Fig. 6C, for example (S32). The presentation interface 861 displays, for example, a simulation result or the like for each measure. Accordingly, the manager 3 can check the result of the progress simulation and the application deadline td displayed for each measure in the presentation interface 861 and can perform an operation selecting whether or not to apply the measure, that is, the determination operation of a measure, for example.

The controller 80 determines whether or not the determination operation of a measure is input by the manager 3 in the presentation interface 861, for example (S33).

When the determination operation of a measure is not input (NO in S33), the controller 80 repeats the determination in step S33 at a predetermined cycle until the determination operation is input, for example. In this case, for example, the controller 80 may repeat step S33 until the application deadline td of the measure comes, and end the processing of the present flowchart when the determination operation is not input after the application deadline td comes. When the application deadline td is earlier than the current time t0 in a plurality of measures, step S33 is repeated until the longest application deadline td, for example. The processing of the present flowchart may be performed in the same cycle as the processing in Fig. 7, for example. For example, when new presentation data D8 is received (YES in S31), the processing in step S33 may be ended, and the next execution cycle may be started.

When the determination operation of a measure is input (YES in S33), the controller 80 transmits various instructions according to the determined measure to the worksite server 9 (S34), for example.

After notifying the worksite server 9 of the determined measure (S34), the controller 80 ends the processing of the present flowchart.

According to the above processing, the controller 80 displays the result of the progress simulation and the application deadline td of each measure (S32) and issues an instruction according to the determined measure, in response to the determination operation of a measure by the manager 3 (YES in S33) (S34). Therefore, the manager 3 can check the result of the progress simulation and the application deadline td displayed for each measure and determine the measure to be implemented in the worksite 4, for example. Furthermore, for example, when receiving an instruction according to the determined measure, the worksite server 9 can transmit various types of data for feeding the instruction back to the facility 5, or can notify a terminal device associated with each of the operators W1 to W3.

3. Summary

As described above, the analysis server 7 in the present embodiment is an example of a progress management device that manages a progress status in implementing the work process as an example of a task planned in advance. The analysis server 7 includes a memory 71, a controller 70, and a network I/F 75. The memory 71 stores plan data indicating a plan related to task. The controller 70 (an example of the data obtainer) acquires the process log data D1, the process state data D2, and the estimated operator count, each as an example of the implementation data indicating a status in which the task is under implementation (S11). Based on the stored plan data and the acquired implementation data, the controller 70 controls the progress simulation processing (an example of simulation processing) to simulate a predicted progress status in which task is implemented after the current time t0 as an example of the status indicated by the implementation data (S12, S14, S15). The network I/F 75 (an example of an output interface) outputs information. The controller 70 detects a delayed state in which the predicted progress status is delayed from the plan indicated by the plan data, the predicted progress status is simulated in the progress simulation processing (S13). Based on a prediction result from the simulation processing for a case where the measure for improving the detected delayed state is applied (S14, S15), the controller 70 determines an application deadline td to apply the measure to improve the delayed state (S15). The controller 70 causes the network I/F 75 to output the presentation data D8 as an example of the presentation information including the determined application deadline td (S16).

According to the analysis server 7 described above, the delayed state in the progress status predicted in the progress simulation processing is detected (S13), and the application deadline td by which the measure is applied is identified (S15), whereby the presentation data D8 including the application deadline td is output (S16). Therefore, using the presentation data D8, it is possible to facilitate realizing improvement on the delayed state in the progress status in the task process. In the present embodiment, the controller 70 performs simulation processing based on the implementation data acquired by the data obtainer (S12, S14, S15). In the present embodiment, the controller 70 also controls multiple times of simulation processing changing the application time of the measure and identifies the application deadline td (S15).

In the present embodiment, as an example of task, the work process includes a process of the switching task as an example of a process performed with the operator W in the facility 5. The estimated operator count, the process log data D1, and the process state data D2, which are examples of the implementation data, indicate a status regarding at least one of the operator W and the facility 5. In the progress simulation processing that is an example of the simulation processing, the switching period is calculated as an example of a prediction period in which the process is performed, based on the implementation data, to simulate the predicted progress status after the current time t0 (an example of the status indicated by the implementation data) (S12, S14, S15). In the present embodiment, the process performed in the facility 5 with the operator W may include a process of the recovery task of the facility 5. The prediction period may be a period required for the recovery task of the facility 5.

In the present embodiment, the controller 70 calculates the operator count in the facility 5, based on the operator data D3 as an example of the implementation data acquired by the data obtainer (S11). The controller 70 controls the progress simulation processing (an example of the simulation processing) to calculate the switching period (an example of the prediction period) based on the calculated operator count (steps S12, S14, and S15, above step (a1)). In the present embodiment, the controller 70 calculates the predetermined switching period according to the operator count, as the switching period.

In the present embodiment, the measure includes the addition of the operator W. With the application of such measure, the switching period can be shortened to improve the delayed state, for example.

In the present embodiment, the presentation data D8 that is an example of the presentation information further includes at least one of: graphs G0 and Gd each as an example of a first prediction result; and the graph Gs as an example of a second prediction result. The prediction result is from the simulation processing for a case where the measure is applied. The second prediction result is from the simulation processing for a case where the measure is not applied. By using such presentation data D8, it is possible to further facilitate realizing improvement on the delayed state in the progress status in the work process.

In the present embodiment, the progress management system 1 includes the analysis server 7 (an example of the progress management device) and a manager terminal 8 (an example of a terminal device). The manager terminal 8 receives the presentation data D8 as an example of the presentation information output from the progress management device (S31), to present the received presentation data D8 to the manager 3 who is an example of a user (S32). According to such a progress management system 1, for example, the manager 3 can check the presentation data D8 in the manager terminal 8, and can easily realize improvement on the delayed state in the progress status in the work process.

In the present embodiment, the manager terminal 8, which is an example of a terminal device, includes the network I/F 85 as an example of a communication interface, the display 83, the operation I/F 82 as an example of a user interface, and the controller 80 as an example of a terminal controller. The network I/F 85 performs data communication with an external device. The presentation interface 861 configured in the display 83 displays the presentation data D8 (an example of the presentation information) received from the analysis server 7 that is an example of the progress management device (YES in S31) (S32). The presentation interface 861 is also configured in the operation I/F 82 and receives the determination operation of a measure by the manager 3 as an example of a user operation selecting, based on the presentation data D8, whether or not to apply the measure (S33). When the determination operation of a measure is input as an example of a case where applying measure is selected according to the user operation (YES in S33), the controller 80 performs the processing issuing an instruction according to the determined measure as an example of predetermined control (S34). Therefore, for example, when applying the measure is selected, it is possible to easily realize improvement on the delayed state in the progress status in the work process by performing control according to the measure.

The progress management method in the present embodiment is a method for managing, by the analysis server 7 that is an example of a computer, a progress status in implementing a task planned in advance. The memory 71 of the analysis server 7 stores plan data indicating a plan related to task. The present method includes acquiring (S11), by the analysis server 7, implementation data indicating a status in which task is under implementation, controlling (S12, S14, S15), by the controller 70 of the analysis server 7, simulation processing to simulate, based on the stored plan data and the acquired implementation data, a predicted progress status in which the task is implemented after the status indicated by the implementation data, and outputting (S16) information by the network I/F 75 (an example of an output interface of the computer) of the analysis server 7. In the present method, the controller 70 detects a delayed state in which the progress status predicted is delayed from the plan indicated by the plan data, the predicted progress status being simulated in the simulation processing (S13), determines, based on a prediction result from the simulation processing for a case where the measure for improving the detected delayed state is applied, an application deadline td to apply a measure to improve the delayed state (S14 to S15), and causes the network I/F 75 to output the presentation data D8 as an example of the presentation information including the determined application deadline td (S16).

In the present embodiment, a program for causing a controller of a computer to perform the progress management method as described above is provided. According to the progress management method of the present embodiment, it is possible to facilitate realizing improvement on the delayed state in the progress status in the task process.

(Second Embodiment)

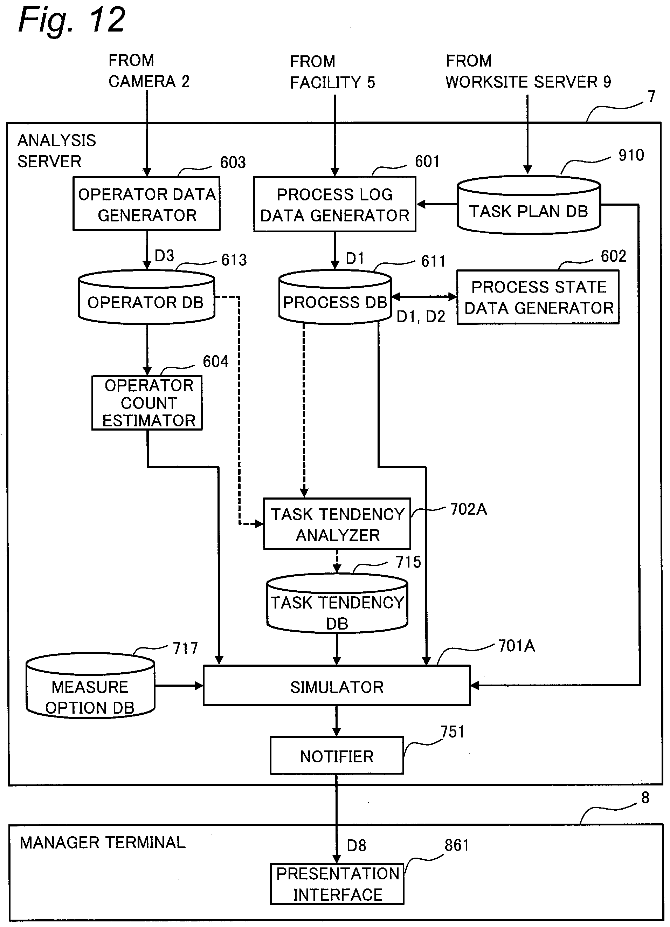

Hereinafter, a second embodiment of the present disclosure will be described with reference to Figs. 12 to 14. The first embodiment describes the progress management system 1 that performs progress simulation based on the various types of data D1 to D3 collected in real-time. In the second embodiment, a progress management system 1 that performs progress simulation further according to a past task tendency, such as a period until the operator W starts the task in the worksite 4, will be described.

Hereinafter, a description of configurations and operations similar to those of the progress management system 1 according to the first embodiment will be omitted as appropriate, and the progress management system 1 according to the present embodiment will be described.

Fig. 12 is a diagram illustrating a functional configuration of the progress management system 1 of the present embodiment. The analysis server 7 in the progress management system 1 of the present embodiment includes a task tendency analyzer 702A and a task tendency DB 715 that generate in advance information to be used for the simulator 701A of the present embodiment, in addition to the same configuration (Fig. 4) as in the first embodiment.

The task tendency analyzer 702A is configured in the controller 70, and generates task tendency information indicating a tendency of the operator W to perform task in the worksite 4 based on the past process state data D2 and operator data D3, for example. The generated task tendency information is stored in the task tendency DB 715 configured in the storage unit 71a, for example.

In the present embodiment, the task tendency information includes a period from the start of the switching task until at least one operator W actually starts the switching task in the worksite 4, that is, a task unperformed period, for example. The simulator 701A of the present embodiment is configured similarly to the simulator 701 of the first embodiment, and performs progress simulation based on the task tendency information described above in addition to the respective pieces of data D1 to D3.

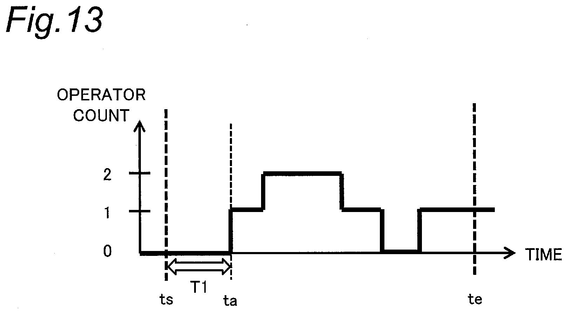

Fig. 13 is a diagram illustrating a task unperformed period in the progress management system 1 of the present embodiment. Fig. 13 shows a temporal transition of the operator count in a period from the start time ts to the end time te of the switching task in the past for the work line L1, for example.

In the example in Fig. 13, the operator count is "0" at the start time ts of the switching task, the start time ts being managed in the past process state data D2. That is, in a period T1 from the start time ts to the time ta at which the operator count is "1", the switching task is not actually performed. For example, such a task unperformed period T1 may occur in the work line L1 in the worksite 4 when the arrival of the operator W1 and the like to the facility 5 is delayed after the specific facility 5 becomes in the "switching" state. For example, when the respective operators W1 to W3 are in charge of the plurality of work lines L1 and L2 in the worksite 4, it is concerned that the task unperformed period T1 is likely to occur.

Therefore, the progress management system 1 of the present embodiment statistically calculates the task unperformed period T1 from the tendency of the past task in the worksite 4, and performs the progress simulation using the task unperformed period T1. Thus, accuracy of the progress simulation can be improved, and the application deadline td can be identified accurately.

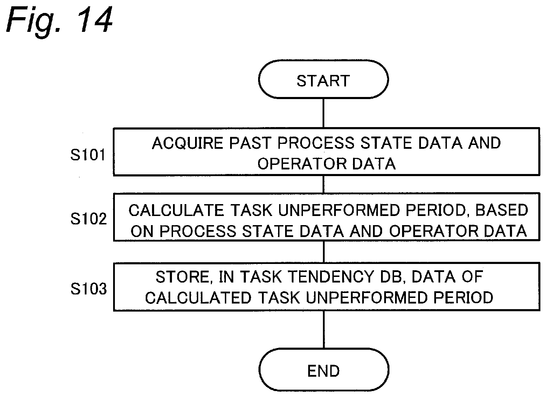

Fig. 14 is a flowchart illustrating an operation calculating a task unperformed period in the analysis server 7 of the present embodiment. The respective pieces of processing shown in the present flowchart are performed for each of the work lines L1 and L2 by the controller 70 functioning as the task tendency analyzer 702A separately from the processing in Fig. 7, for example. The processing of the present flowchart is started at a predetermined cycle such as one day.

First, as shown in Fig. 12, the controller 70 acquires past process state data D2 and operator data D3 stored in the process DB 611 and the operator DB 613, for example (S101).

Next, the controller 70 calculates a task unperformed period T1 based on the respective acquired past data D2 and D3 (S102). The controller 70 repeats the calculation of a period from the start time ts of the switching task to the arrival of at least one operator W for each period in which the facility state in the process state data D2 is "switching", for example. Then, the controller 70 calculates a statistical value such as an average of the respective calculated values, as the task unperformed period T1 used for the progress simulation. The start time ts and the end time te of the switching task respectively correspond to the start time and the end time when the facility state is "switching" in the process state data D2, for example.

The controller 70 stores data indicating the calculated task unperformed period T1 as the task tendency information in the task tendency DB 715 shown in Fig. 12, for example (S103).

After storing the data of the task unperformed period T1 (S103), the controller 70 ends the processing of the present flowchart.

According to the above processing, data of the task unperformed period T1 based on the past process state data D2 and operator data D3 can be prepared in the work tendency DB 715 (S101 to S103). Thereafter, in the progress simulation processing (S12, S14, S15), by using the task unperformed period T1 in the task tendency DB 715, it is possible to improve accuracy in calculating temporal transition of the predicted value of the production quantity or in determining the application deadline td of the measure (S15, S26).

In the present embodiment, for example, the controller 70 as the simulator 701A performs processing of causing the task unperformed period T1 to elapse when executing the progress simulation as in the first embodiment. Before step (a1) described above in the manufacturing system 6a in Fig. 8, that is, before the predetermined switching period is caused to elapse, the controller 70 causes the task unperformed period T1 of the switching task to elapse based on the task tendency information, for example.

In the above example, the task unperformed period of the switching task is described, but a task unperformed period of the recovery task of the facility 5 may be considered. For example, the task tendency analyzer 702A may calculate the task unperformed period of the recovery task, based on the past process log data D1 and operator data D3, similarly to the processing in Fig. 14. In the facility stop/recovery system 6b in Fig. 8, the simulator 701A may cause the task unperformed period of the recovery task to elapse before the above-described step (b2), that is, before the MTTR period is caused to elapse.

As described above, in the present embodiment, the memory 71 stores the task tendency information indicating a tendency for the switching task (an example of the process) performed in the facility 5 with the operator W. The controller 70, referring to the task tendency information stored in the memory 71, controls the progress simulation processing (an example of the simulation processing) to reflect, in the switching period (an example of the prediction period), the tendency indicated by the task tendency information (S12, S14, S15).

In the present embodiment, the task tendency information includes a task unperformed period T1 as an example of a first period indicating the tendency for the operator W absent from the facility 5 at the start time ts of the switching task (an example of a start of the process). The controller 70, referring to the task tendency information, controls the progress simulation processing to include the task unperformed period T1 in the switching period (S12, S14, S15).

(Third Embodiment)

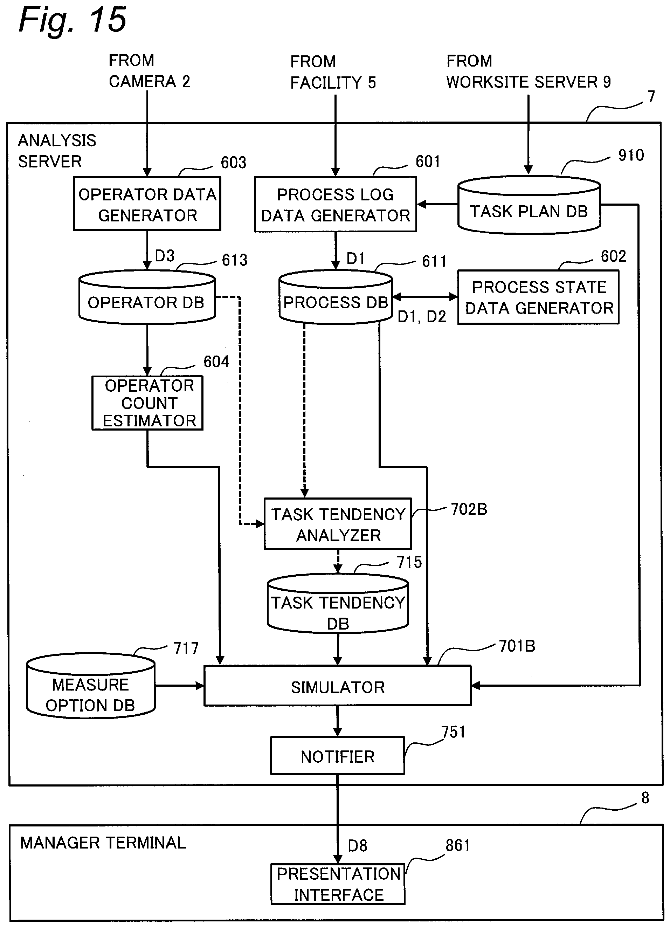

Hereinafter, a third embodiment of the present disclosure will be described with reference to Figs. 15 to 17. The second embodiment describes the progress management system 1 which uses the past task unperformed period T1 for the progress simulation. In the third embodiment, a progress management system 1 will be described in which information indicating a tendency of a period required for the task by the operator W in the worksite 4 (standard task period) is further used for progress simulation.

Hereinafter, a description of configurations and operations similar to those of the progress management system 1 according to the first and second embodiments will be omitted as appropriate, and the progress management system 1 according to the present embodiment will be described.

Fig. 15 is a diagram illustrating a functional configuration of the progress management system 1 according to the third embodiment. In the analysis server 7 in the progress management system 1 of the present embodiment, in a configuration similar to that of the second embodiment, the task tendency analyzer 702B generates task tendency information including a standard task period in addition to the task unperformed period T1. The simulator 701B of the present embodiment performs progress simulation processing using the standard task period Tu in addition to the task unperformed period T1 in a configuration similar to that of the simulator 701A of the second embodiment, for example.

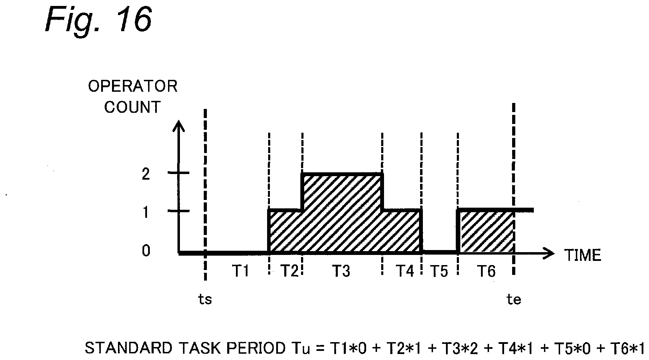

Fig. 16 is a diagram illustrating a standard task period in the progress management system 1 of the present embodiment. Similarly to Fig. 13, Fig. 16 shows a temporal transition of the operator count in a period from the start time ts to the end time te of the switching task for the work line L1, for example.

In the example in Fig. 16, the operator counts are sequentially "1", "2", "1", "0", and "1" respectively in periods T2, T3, T4, T5, and T6 following the task unperformed period T1. As described above, for example, the number of operators may fluctuate during the switching task of the task line L1.

Therefore, the analysis server 7 of the present embodiment calculates a period required for the switching task when the operator count is one, that is, the standard task period Tu, based on the respective data D2 and D3 collected in the past, and performs the progress simulation using a switching period according to the operator count and the standard task period Tu.

In the example in Fig. 16, the standard task period Tu is calculated by the following equation (1) based on the periods T1 to T6 and the operator counts in the respective periods. This calculation corresponds to a calculation for obtaining an area of the hatched region in Fig. 16:

$$Tu = T1*0 + T2*1 + T3*2 + T4*1 + T5*0*T6*1 \quad (1)$$

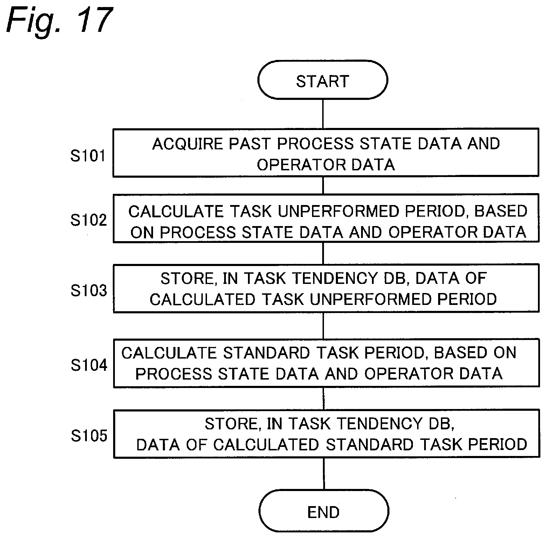

Fig. 17 is a flowchart illustrating an operation calculating the standard task period Tu in the analysis server 7 of the present embodiment. For example, separately from the processing in Fig. 7, the controller 70 as the task tendency analyzer 702B of the present embodiment performs steps S104 and S105 in addition to the same processing as those of the second embodiment (Fig. 14).

Specifically, the controller 70 calculates the standard task period Tu, based on the past process state data D2 and operator data D3 (S104). The standard task period Tu is calculated, for example, for each combination of the type of "passing product" (i.e., each of the products A to C) in the process state data D2 in Fig. 5B and the type of the products produced immediately before. The controller 70 repeats the calculation as in the above equation (1) for each period in which the facility state in the process state data D2 is "switching", and calculates, as the standard task period Tu used for the progress simulation, a statistical value such as an average of the respective calculated values.

In the task tendency DB 715, the controller 70 stores data indicating the calculated standard task period Tu to be added to the task tendency information, for example (S105). Thereafter, the controller 70 ends the processing of the present flowchart. The processing of the present flowchart is repeated in a predetermined cycle such as one day as with the processing in Fig. 14, for example.

According to the above processing, data of the standard task period based on the past process state data D2 and operator data D3 can be prepared in the task tendency DB 715 (S104, S105). Therefore, for example, the progress simulation processing can be performed further accurately using the standard task period of the task tendency DB 715 (S12, S14, S15). In the processing in Fig. 17, the execution order of steps S102 to S105 is not particularly limited to the illustrated order.

When performing the progress simulation as in the second embodiment, the simulator 701B of the present embodiment performs processing causing a period according the operator count and the standard task period to elapse, instead of the predetermined switching period. For example, in the manufacturing system 6a in Fig. 8, the controller 70 as the simulator 701B causes the task unperformed period T1 to elapse before the above-described step (a1), and then causes a period obtained by dividing the standard task period by the number of operators to elapse instead of the step (a1). The controller 70 calculates a period caused to elapse using the estimated operator count acquired in step S11 in Fig. 7, for example.

In the above calculation, when the estimated operator count varies in the standard task period, the controller 70 may calculate a period according to the operator count for each time section corresponding to each of the varied estimated operator counts, and add up each period to calculate the period caused to elapse, for example.

In addition, also in the calculation of the estimated completion time (S21 in Fig. 9), the standard task period may be used instead of the predetermined switching period.

In addition, the simulator 701B may perform the progress simulation using only the standard task period Tu without using the task unperformed period T1. In this case, steps S102 and S103 do not need to be performed in the processing of the flowchart in Fig. 17.

As described above, in the present embodiment, the task tendency information includes the standard task period Tu as an example of the second period indicating the tendency for the switching task (an example of the process) performed with one operator. The controller 70, referring to the task tendency information, controls the progress simulation processing (an example of the simulation processing) to use the standard task period Tu in calculating the switching period (an example of the prediction period) (S12, S14, S15).

(Other Embodiments)

As described above, the first to third embodiments are described as exemplification of the technique disclosed in the present application. However, the technique in the present disclosure is not limited thereto, and can also be applied to embodiments in which changes, substitutions, additions, omissions, and the like are made as appropriate. In addition, it is also possible to combine each component described in each of the above-described embodiments to form a new embodiment. Hereinafter, other embodiments will be exemplified.

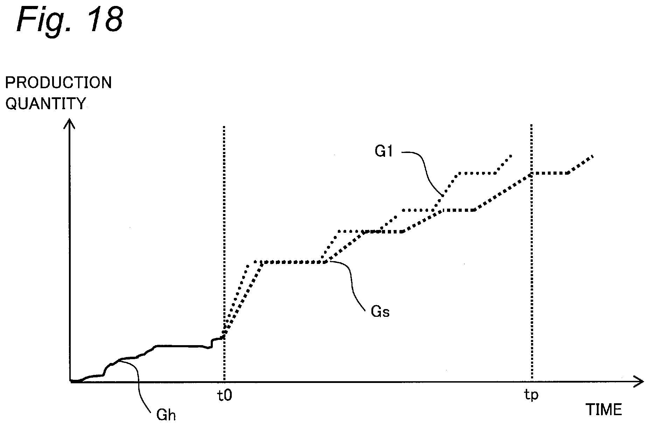

In each of the above embodiments, an example in which the operator W is added to the work line L1 in the delayed state is described as a measure for improving the delayed state caused in the progress status in the work process in the worksite 4. The measures applied to the work process in the worksite 4 are not limited thereto. Hereinafter, a modification of each of the above-described embodiments 1 to 3 will be described with reference to Fig. 18. Fig. 18 is a diagram illustrating measures in the progress management system according to the modification.

Similarly to Fig. 6A, Fig. 18 shows respective graphs Gh and Gs for the work line L1. Also in the example in Fig. 18, in the graph Gs in a case of not applying measures, a delayed state occurs compared with the planned completion time tp.

Fig. 18 further shows a graph G1 of predicted values by progress simulation when the measure of the present modification is applied at the current time t0. In the measure of the present modification, a facility 5 is added to the work line L1 in the delayed state from another work line L2 in which the estimated completion time by the progress simulation (S12) is earlier than the planned completion time tp, for example. Therefore, since the production task is shared among the facilities 5 in the work line L1 and a burden of the production task allocated to each facility 5 is reduced, the production rate (i.e., the production quantity per hour) is improved and the delayed state is improved. In the graph G1 in Fig. 18, after the current time t0 at which the measure is applied, the period corresponding to the production task (i.e., the period in which the production quantity increases with time) is shortened, and the delayed state is resolved.

Therefore, when the measure of the present modification is applied at the current time t0, as shown in Fig. 18, the slope of the graph G1 is larger than the slope of the graph Gs in the period corresponding to the production task after the current time t0. In the measure of the present modification, the facility 5 added to the task line L1 may be a facility in a work line that is not in operation when the measure is applied, for example.

In addition, in the present embodiment, as another example of measures in the worksite 4, the information on the task plan in the task plan DB 910 may be corrected according to the detection of the delayed state. For example, in the work line L1 in the delayed state, a production quantity of the products whose production is not completed by the planned completion time tp, out of the production quantity scheduled in the task plan, may be produced in another work line L2. A predetermined production quantity (e.g., half of the production quantity in the task plan) in the work line L1 may be produced in another work line L2. Also with this, the production quantity in the work line L1 can be distributed to the work line L2 and the delayed state can be improved. In addition, in another work line L2 to which the present measure is applied, when the production completion time based on the predicted value of the progress simulation is earlier than the planned completion time tp, the application deadline td of the measure may be determined by the processing similar to that in Fig. 9 for the work line, for example.

In each of the above embodiments, the measure includes at least one of the addition of the operator W, the addition of the facility 5, and the correction of the task plan stored in the task plan DB 910 as an example of correction of the plan data. In the present embodiment, a plurality of measures may be applied in any combination.

In each of the above embodiments, an example is described in which the operator count estimator 604 of the analysis server 7 calculates the estimated operator count based on the image data of the camera 2. The calculation of the estimated operator count may be performed using another sensor or the like, not limited to the image data of the camera 2. For example, a vibration sensor that detects vibration by each operator W may be provided in a work area corresponding to each facility 5 of the worksite 4. The operator count estimator 604 may calculate the estimated operator number by acquiring a detection result of the vibration sensor and determining whether or not the operator W stays in each work area or whether the operator W arrives or leaves based on the detection result.

In each of the above embodiments, an example is described in which the analysis server 7 includes the operator count estimator 604, but the operator count estimator 604 does not need to be included. In the present embodiment, the analysis server 7 does not need to include the operator data generator 603 and the operator DB 613. The analysis server 7 of the present embodiment may perform progress simulation (S12, S14, S15) and calculation of the estimated completion time (S21), using the number of operators set in advance in the task plan instead of the estimated number of operators, for example.

In each of the above embodiments, the presentation data D8 as shown in Fig. 6C is described, but the presentation data D8 is not limited to the example in Fig. 6C. For example, the presentation data D8 may include a graph G0 assuming that a measure is applied at the current time t0 as shown in Fig. 6B. In addition, the presentation data D8 may include only the application deadline td.

In the first and second embodiments described above, in the progress simulation, an example is described in which the predetermined switching period used in the manufacturing system 6a in Fig. 8 is set for each expected number of operators in advance. In the present embodiment, the predetermined switching period may not be set for each number of operators, and may be set to a statistical value such as an average over a plurality of switching task periods in the past process state data D2, for example. In this case, in the progress simulation, in the step (a1) related to the manufacturing system 6a in Fig. 8, processing of simply causing the predetermined switching period to elapse may be performed regardless of the number of operators.

In the second and third embodiments described above, an example is described in which the processing in Fig. 14 or 17, that is, the processing generating the task tendency information is performed in a predetermined cycle. In this case, for example, the task tendency information in the task tendency DB 715 may be updated as needed. In the present embodiment, when an operation by the manager 3 for setting the task unperformed period is input in the manager terminal 8, the processing in Fig. 14 or 17 may be started in response to the transmission of an operation signal indicating the operation from the manager terminal 8 to the analysis server 7, without being limited to the predetermined cycle, for example.

In the second and third embodiments described above, an example is described in which the processing in Fig. 14 or 17 is performed for each of the work lines L1 and L2. In the present embodiment, the processing in Fig. 14 or 17 may be performed for each operator W or each facility 5 instead of each of the work lines L1 and L2. In this case, the task unperformed period T1 is calculated for each operator W or by an average among the operators W for each facility 5, for example.

In each of the above embodiments, an example is described in which the switching task is performed when the facility state in each of the work lines L1 and L2 is "switching" in the process state data D2. In the present embodiment, the switching task may be performed for each facility 5 in each of the work lines L1 and L2, not limited to each of the work lines L1 and L2, for example. In this case, for example, an item "facility" may be provided in the process state data D2, and the facility state for each facility 5 may be managed.

In each of the above embodiments, an example is described in which the analysis server 7 acquires sensor data from the facility 5 and generates various types of data such as the process log data D1. In the present embodiment, various types of processing of the analysis server 7 may be performed in the worksite server 9, for example. In this case, the worksite server 9 may include a functional configuration of the analysis server 7 shown in Fig. 4, for example.

In each of the above embodiments, an example is described in which the analysis server 7 performs data communication with the facility 5 via the communication network. The analysis server 7 of the present embodiment may be installed in the worksite 4 and connected to the facility 5 so as to acquire various types of data by the device I/F 74, for example.

In each of the above embodiments, an example is described in which the presentation data D8 is transmitted from the analysis server 7 to the manager terminal 8. In the present embodiment, the presentation data D8 may be output via the device I/F 74 to an external display terminal such as a display connected to the analysis server 7, not limited to the manager terminal 8, for example.

In each of the above embodiments, an example is described in which the analysis server 7 is implemented by an information processing device different from the manager terminal 8. In the present embodiment, the analysis server 7 may be configured integrally with the manager terminal 8, for example.

In each of the above embodiments, an example is described in which the controller 70 of the analysis server 7 (an example of the progress management device) performs progress simulation which is an example of simulation processing. In the present embodiment, the progress management device does not need to perform the simulation processing. The progress management device of the present embodiment may further include a communication interface that performs data communication with an external computing device that performs the simulation processing. The controller may transmit the implementation data, which is acquired by the data obtainer, to the computing device via the communication interface and may receive a result of the simulation processing from the computing device.

In each of the above embodiments, an example is described in which the worksite server 9 manages various types of information in the worksite 4. In the present embodiment, the worksite server 9 may be configured to manage various types of information of the worksite 4 on a communication network such as the Internet.

In each of the above embodiments, an example is described in which the progress management system 1 is applied to the worksite 4 such as a factory. In the present embodiment, the site to which the progress management system 1 is applied is not particularly limited to the worksite 4, and may be various sites such as a distribution warehouse or a selling space of a shop.

As described above, the embodiments are described as exemplifications of the technique in the present disclosure. To this extent, the attached drawings and detailed descriptions are provided.

Therefore, the components described in the accompanying drawings and the detailed description may include not only components essential for solving the problem but also components that are not essential for solving the problem in order to exemplify the above technique. Therefore, it should not be immediately recognized that these non-essential components are essential based on the fact that these non-essential components are described in the accompanying drawings and the detailed description.

In addition, since the above embodiments are for exemplifying the technique in the present disclosure, various changes, substitutions, additions, omissions, and the like can be made within the scope of the claims or the equivalent thereof.

Industrial Applicability

The present disclosure is applicable to various progress management systems that manage the progress in a work process in various environments such as a factory, a distribution site, or a shop.

**Claims**

1. A progress management device (1) for managing a progress status in implementing a product manufacturing task planned in advance, the progress management device (1) comprising:

   a memory (71) configured to store plan data indicating a plan related to the task;
   a data obtainer configured to acquire implementation data from a camera (2) indicating a status in which the task is under implementation;
   a controller (70) configured to control, based on the stored plan data and the acquired implementation data, simulation processing to simulate a predicted progress status in which the task is implemented after the status indicated by the implementation data; and
   an output interface (861) configured to output information,

wherein the controller (70) is configured to

detect a delayed state in which the predicted progress status is delayed compared with the plan indicated by the plan data, the predicted progress status being simulated in the simulation processing,

**characterized in that**

the controller (70) is further configured to

determine, based on a prediction result from the simulation processing for a case where a measure for improving the detected delayed state is applied, an application deadline to apply the measure to improve the delayed state, and

cause the output interface (8) to output presentation information including the determined application deadline.

2. The progress management device (1) according to claim 1, wherein the task includes a process performed with an operator in a facility (5), the implementation data indicates a status regarding at least one of the operator or the facility (5), and

the simulation processing calculates a prediction period in which the process is performed, based on the implementation data, to simulate the predicted progress status after the status indicated by the implementation data.

3. The progress management device (1) according to claim 2, wherein

the memory (71) is configured to store task tendency information indicating a tendency in the process performed with the operator in the facility (5), and

the controller (70) is configured to control the simulation processing to reflect, in the prediction period, the tendency indicated by the task tendency information, referring to the task tendency information stored in the memory (71).

4. The progress management device (1) according to claim 3, wherein

the task tendency information includes a first period indicating the tendency for the operator absent from the facility (5) at a start of the process, and

the controller (70) is configured to control the simulation processing to include the first period in the prediction period, referring to the task tendency information.

5. The progress management device (1) according to claim 3 or 4, wherein

the task tendency information includes a second period indicating the tendency for the process performed with one operator, and

the controller (70) is configured to control the simulation processing to use the second period in calculating the prediction period, referring to the task tendency information.

6. The progress management device (1) according to any one of claims 2 to 5, wherein the controller (70) is configured to

calculate the number of operators in the facility (5), based on the implementation data acquired by the data obtainer, and

control the simulation processing to calculate the prediction period, based on the calculated number of operators.

7. The progress management device (1) according to any one of claims 2 to 6, wherein the measure includes at least one of addition of the operator, addition of the facility (5), or correction of the plan data.

8. The progress management device (1) according to any one of claims 1 to 7, wherein the presentation information further includes at least one of a first prediction result or a second prediction result, the first prediction result being from the simulation processing when the measure is applied, the second prediction result being from the simulation processing when the measure is not applied.

9. A progress management system comprising:

the progress management device (1) according to any one of claims 1 to 8; and

a terminal device configured to receive the presentation information output from the progress management device (1) to present the received presentation information to a user.

10. The progress management system according to claim 9, wherein the terminal device includes:

a communication interface configured to perform data communication with an external device;
a display (83) configured to display the presentation information received from the progress management device (1);
a user interface configured to receive a user operation selecting, based on the presentation information, whether or not to apply the measure; and
a terminal controller (80) configured to perform predetermined control when applying the measure is selected according to the user operation.

11. A progress management method for managing, by a computer, a progress status in implementing a product manufacturing task planned in advance, a memory (71) of the computer storing plan data which indicates a plan related to the task, the progress management method comprising:

acquiring, by the computer, implementation data from a camera (2) indicating a status in which the task is under implementation;
controlling, by a controller (70) of the computer, simulation processing to simulate a predicted progress status in which the task is implemented after the status indicated by the implementation data, based on the stored plan data and the acquired implementation data; and
outputting, by an output interface (73) of the computer, information,
wherein the controller (70)
detects a delayed state in which the predicted progress status is delayed compared with the plan indicated by the plan data, the predicted progress status being simulated in the simulation processing,
**characterized in that**
the controller (70) further
determines, based on a prediction result from the simulation processing for a case where a measure for improving the detected delayed state is applied, an application deadline to apply the measure to improve the delayed state, and
causes the output interface to output presentation information including the determined application deadline.

12. A program for causing a controller (70) of a computer to execute the progress management method according to claim 11.


**Patentansprüche**

1. Fortschrittsverwaltungsvorrichtung (1) zum Verwalten eines Fortschrittsstatus beim Implementieren einer im Voraus geplanten Produktherstellungsaufgabe, wobei die Fortschrittsverwaltungsvorrichtung (1) umfasst:

einen Speicher (71), der dazu konfiguriert ist, Plandaten zu speichern, die einen auf die Aufgabe bezogenen Plan angeben;
einen Datenbeschaffer, der dazu konfiguriert ist, Implementierungsdaten von einer Kamera (2) zu erfassen, die einen Status angeben, in dem sich die Aufgabe in Implementierung befindet;
eine Steuerung (70), die dazu konfiguriert ist, basierend auf den gespeicherten Plandaten und den erfassten Implementierungsdaten eine Simulationsverarbeitung zu steuern, um einen vorhergesagten Fortschrittsstatus zu simulieren, in dem die Aufgabe nach dem durch die Implementierungsdaten angegebenen Status implementiert wird; und
eine Ausgabeschnittstelle (861), die dazu konfiguriert ist, Informationen auszugeben,
wobei die Steuerung (70) zu Folgendem konfiguriert ist:

Erkennen eines verzögerten Zustands in dem der vorhergesagte Fortschrittsstatus im Vergleich zu dem durch die Plandaten angegebenen Plan verzögert ist, wobei der vorhergesagte Fortschrittsstatus in der Simulationsverarbeitung simuliert wird,
**dadurch gekennzeichnet, dass**
die Steuerung (70) des Weiteren zu Folgendem konfiguriert ist:

Bestimmen, basierend auf einem Vorhersageergebnis aus der Simulationsverarbeitung für einen Fall, in dem eine Maßnahme zur Verbesserung des erkannten verzögerten Zustands angewendet wird, einer Anwendungsfrist zum Anwenden der Maßnahme zur Verbesserung des verzögerten Zustands, und Veranlassen der Ausgabeschnittstelle (8) zum Ausgeben von Darstellungsinformationen, die die bestimmte Anwendungsfrist beinhalten.

2.  Fortschrittsverwaltungsvorrichtung (1) nach Anspruch 1, wobei die Aufgabe einen Prozess beinhaltet, der mit einem Bediener in einer Einrichtung (5) durchgeführt wird, wobei die Implementierungsdaten einen Status anzeigen, der mindestens eines von dem Bediener oder der Einrichtung (5) betrifft, und
    die Simulationsverarbeitung eine Vorhersageperiode berechnet, in der der Prozess durchgeführt wird, basierend auf den Implementierungsdaten, um den vorhergesagten Fortschrittsstatus nach dem durch die Implementierungsdaten angegebenen Status zu simulieren.

3.  Fortschrittsverwaltungsvorrichtung (1) nach Anspruch 2, wobei

    der Speicher (71) dazu konfiguriert ist, Aufgabentendenzinformationen zu speichern, die eine Tendenz in dem mit dem Bediener in der Einrichtung (5) durchgeführten Prozess angeben, und
    die Steuerung (70) dazu konfiguriert ist, die Simulationsverarbeitung zu steuern, um in der Vorhersageperiode die durch die Aufgabentendenzinformationen angegebene Tendenz unter Bezugnahme auf die in dem Speicher (71) gespeicherte Aufgabentendenzinformationen wiederzugeben.

4.  Fortschrittsverwaltungsvorrichtung (1) nach Anspruch 3, wobei

    die Aufgabentendenzinformationen eine erste Periode beinhalten, die die Tendenz der Abwesenheit des Bedieners von der Einrichtung (5) zu einem Beginn des Prozesses angibt, und
    die Steuerung (70) dazu konfiguriert ist, die Simulationsverarbeitung zu steuern, um die erste Periode in der Vorhersageperiode unter Bezugnahme auf die Aufgabentendenzinformationen zu beinhalten.

5.  Fortschrittsverwaltungsvorrichtung (1) nach Anspruch 3 oder 4, wobei

    die Aufgabentendenzinformationen eine zweite Periode beinhalten, die die Tendenz für den mit einem Bediener durchgeführten Prozess angibt, und
    die Steuerung (70) dazu konfiguriert ist, die Simulationsverarbeitung zu steuern, um die erste Periode beim Berechnen der Vorhersageperiode unter Bezugnahme auf die Aufgabentendenzinformationen zu verwenden.

6.  Fortschrittsverwaltungsvorrichtung (1) nach einem der Ansprüche 2 bis 5, wobei die Steuerung (70) zu Folgendem konfiguriert ist:

    Berechnen der Anzahl der Bediener in der Einrichtung (5) basierend auf den von dem Datenbeschaffer erfassten Implementierungsdaten, und
    Steuern der Simulationsverarbeitung, um die Vorhersageperiode basierend auf der berechneten Anzahl der Bediener zu berechnen.

7.  Fortschrittsverwaltungsvorrichtung (1) nach einem der Ansprüche 2 bis 6, wobei die Maßnahme mindestens eines aus Hinzufügen des Bedieners, Hinzufügen der Einrichtung (5) oder Korrektur der Plandaten beinhaltet.

8.  Fortschrittsverwaltungsvorrichtung (1) nach einem der Ansprüche 1 bis 7, wobei die Darstellungsinformationen des Weiteren mindestens eines von einem ersten Vorhersageergebnis oder einem zweiten Vorhersageergebnis beinhalten, wobei das erste Vorhersageergebnis aus der Simulationsverarbeitung stammt, wenn die Maßnahme angewendet wird, und das zweite Vorhersageergebnis aus der Simulationsverarbeitung stammt, wenn die Maßnahme nicht angewendet wird.

9.  Fortschrittsverwaltungssystem, das umfasst:

    die Fortschrittsverwaltungsvorrichtung (1) nach einem der Ansprüche 1 bis 8; und
    eine Endgerätvorrichtung, die dazu konfiguriert ist, die von der Fortschrittsverwaltungsvorrichtung (1) ausgegebenen Darstellungsinformationen zu empfangen, um die empfangenen Darstellungsinformationen für einen Benutzer darzustellen.

10. Fortschrittsverwaltungssystem nach Anspruch 9, wobei die Endgerätvorrichtung beinhaltet:

eine Kommunikationsschnittstelle, die dazu konfiguriert ist, eine Datenkommunikation mit einer externen Vorrichtung durchzuführen;

eine Anzeige (83), die dazu konfiguriert ist, die von der Fortschrittsverwaltungsvorrichtung (1) empfangenen Darstellungsinformationen anzuzeigen;

eine Benutzerschnittstelle, die dazu konfiguriert ist, eine Benutzerbedienung zu empfangen, die basierend auf den Darstellungsinformationen auswählt, ob die Maßnahme angewendet werden soll oder nicht; und

eine Endgerätesteuerung (80), die dazu konfiguriert ist, eine vorgegebene Steuerung durchzuführen, wenn die Anwendung der Maßnahme gemäß der Benutzerbedienung ausgewählt wird.

11. Fortschrittsverwaltungsverfahren zum Verwalten, durch einen Computer, eines Fortschrittsstatus beim Implementieren einer im Voraus geplanten Produktherstellungsaufgabe, wobei ein Speicher (71) des Computers Plandaten speichert, die einen auf die Aufgabe bezogenen Plan angeben, wobei das Fortschrittsverwaltungsverfahren umfasst:

Erfassen, durch den Computer, von Implementierungsdaten von einer Kamera (2), die einen Status angeben, in dem sich die Aufgabe in Implementierung befindet;

Steuern, durch eine Steuerung (70) des Computers, der Simulationsverarbeitung, um einen vorhergesagten Fortschrittsstatus zu simulieren, in dem die Aufgabe nach dem durch die Implementierungsdaten angegebenen Status implementiert wird, basierend auf den gespeicherten Plandaten und den erfassten Implementierungsdaten; und

Ausgeben, durch eine Ausgabeschnittstelle (73) des Computers, von Informationen,

wobei die Steuerung (70)

einen verzögerten Zustand erkennt, in dem der vorhergesagte Fortschrittsstatus im Vergleich zu dem durch die Plandaten angegebenen Plan verzögert ist, wobei der vorhergesagte Fortschrittsstatus in der Simulationsverarbeitung simuliert wird,

**dadurch gekennzeichnet, dass**

die Steuerung (70) des Weiteren

basierend auf einem Vorhersageergebnis aus der Simulationsverarbeitung für einen Fall, in dem eine Maßnahme zur Verbesserung des erkannten verzögerten Zustands angewendet wird, eine Anwendungsfrist zum Anwenden der Maßnahme zur Verbesserung des verzögerten Zustands bestimmt, und

die Ausgabeschnittstelle veranlasst, Darstellungsinformationen auszugeben, die die bestimmte Anwendungsfrist beinhalten.

12. Programm zum Veranlassen einer Steuerung (70) eines Computers, das Fortschrittsverwaltungsverfahren nach Anspruch 11 auszuführen.

## Revendications

1. Dispositif de gestion de progression (1) pour gérer un état de progression dans une mise en œuvre d'une tâche de fabrication de produit planifiée à l'avance, le dispositif de gestion de progression (1) comprenant :

une mémoire (71) configurée pour stocker des données de plan indiquant un plan associé à la tâche ;

un module d'obtention de données configuré pour acquérir des données de mise en œuvre à partir d'une caméra (2) indiquant un état dans lequel la tâche est en cours de mise en œuvre ;

un contrôleur (70) configuré pour contrôler, selon les données de plan stockées et les données de mise en œuvre acquises, un traitement de simulation pour simuler un état de progression prédit dans lequel la tâche est mise en œuvre après l'état indiqué par les données de mise en œuvre ; et

une interface de sortie (861) configurée pour sortir des informations,

dans lequel le contrôleur (70) est configurée pour détecter un état retardé dans lequel l'état de progression prédit est retardé comparé au plan indiqué par les données de plan, l'état de progression prédit étant simulé dans le processus de simulation,

**caractérisé en ce que**

le contrôleur (70) est configuré en outre pour

déterminer, selon un résultat de prédiction issu du traitement de simulation pour un cas où une mesure pour améliorer l'état retardé détecté est appliquée, une limite temporelle d'application pour appliquer la mesure pour améliorer l'état retardé, et

faire en sorte que l'interface de sortie (8) sorte des informations de présentation incluant la limite temporelle d'application déterminée.

**2.** Le dispositif de gestion de progression (1) selon la revendication 1, dans lequel la tâche inclut un processus exécuté avec un opérateur dans une installation (5), les données de mise en œuvre indiquent un état relatif à au moins un de l'opérateur ou de l'installation (5), et

le traitement de simulation calcule une période de prédiction dans laquelle le processus est exécuté, selon les données de mise en œuvre, pour simuler l'état de progression prédit après l'état indiqué par les données de mise en œuvre.

**3.** Le dispositif de gestion de progression (1) selon la revendication 2, dans lequel

la mémoire (71) est configurée pour stocker des informations de tendance de tâche indiquant une tendance dans le processus exécuté avec l'opérateur dans l'installation (5), et

le contrôleur (70) est configuré pour contrôler le traitement de simulation pour refléter, sur la période de prédiction, la tendance indiquée par les informations de tendance de tâche, par référence aux informations de tendance de tâche stockées dans la mémoire (71).

**4.** Le dispositif de gestion de progression (1) selon la revendication 3, dans lequel

les informations de tendance de tâche incluent une première période indiquant la tendance pour l'opérateur absent de l'installation (5) à un début du processus, et

le contrôleur (70) est configuré pour contrôler le traitement de simulation pour inclure la première période dans la période de prédiction, par référence aux informations de tendance de tâche.

**5.** Le dispositif de gestion de progression (1) selon la revendication 3 ou 4, dans lequel

les informations de tendance de tâche incluent une deuxième période indiquant la tendance pour le processus exécuté avec un opérateur, et

le contrôleur (70) est configuré pour contrôler le traitement de simulation pour utiliser la deuxième période en calculant la période de prédiction, par référence aux informations de tendance de tâche.

**6.** Le dispositif de de gestion de progression (1) selon l'une quelconque des revendications 2 à 5, dans lequel le contrôleur (70) est configuré pour

calculer le nombre d'opérateurs dans l'installation (5), selon les données de mise en œuvre acquises par le module d'obtention de données, et

contrôler le traitement de simulation pour calculer la période de prédiction, selon le nombre calculé d'opérateurs.

**7.** Le dispositif de gestion de progression (1) selon l'une quelconque des revendications 2 à 6, dans lequel la mesure inclut au moins un d'un ajout de l'opérateur, d'un ajout de l'installation (5) ou d'une correction des données de plan.

**8.** Le dispositif de gestion de progression (1) selon l'une quelconque des revendications 1 à 7, dans lequel les informations de présentation incluent en outre au moins un d'un premier résultat de prédiction ou d'un deuxième résultat de prédiction, le premier résultat de prédiction étant issu du traitement de simulation lorsque la mesure est appliquée, le deuxième résultat de prédiction étant issu du traitement de simulation lorsque la mesure n'est pas appliquée.

**9.** Système de gestion de progression comprenant :

le dispositif de gestion de progression (1) selon l'une quelconque des revendications 1 à 8 ; et

un dispositif terminal configuré pour recevoir les informations de présentation issue du dispositif de gestion de progression (1) pour présenter les informations de progression reçues à un utilisateur.

**10.** Le système de gestion de progression selon la revendication 9, dans lequel le dispositif terminal inclut :

une interface de communication configurée pour exécuter une communication de données avec un dispositif externe ;

un écran (83) configuré pour afficher les informations de présentation reçues du dispositif de gestion de progression (1) ;

une interface d'utilisateur configuré pour recevoir une opération d'utilisation sélectionnant, selon les informations de présentation, d'appliquer ou non la mesure ; et
un contrôleur terminal (80) configuré pour exécuter un contrôle prédéterminé lorsqu'une application de la mesure est sélectionnée selon l'opération d'utilisateur.

11. Procédé de gestion de progression pour gérer, par un ordinateur, un état de progression dans une mise en œuvre d'une tâche de fabrication de produit planifiée à l'avance, une mémoire (71) de l'ordinateur stockant des données de plan qui indiquent un plan associé à la tâche, le procédé de gestion de progression comprenant :

une acquisition, par l'ordinateur, de données de mise en œuvre à partir d'une caméra (2) indiquant un état dans lequel la tâche est en cours de mise en œuvre ;
un contrôle, par un contrôleur (70) de l'ordinateur, d'un traitement de simulation pour simuler un état de progression prédit dans lequel la tâche est mise en œuvre après l'état indiqué par les données de mise en œuvre, selon les données de plan stockées et les données de mise en œuvre acquises ; et
une sortie, par une interface de sortie (73) de l'ordinateur, d'informations,
dans lequel le de contrôle (70)
détecte un état retardé dans lequel l'état de progression prédit est retardé comparé au plan indiqué par les données de plan, l'état de progression prédit étant simulé dans le processus de simulation,
**caractérisé en ce que**
le contrôleur (70) en outre
détermine, selon un résultat de prédiction issu du traitement de simulation pour un cas où une mesure pour améliorer l'état retardé détecté est appliquée, une limite temporelle d'application pour appliquer la mesure pour améliorer l'état retardé, et
fait en sorte que l'interface de sortie sorte des informations de présentation incluant la limite temporelle d'application déterminée.

12. Programme pour faire exécuter à un contrôleur (70) d'un ordinateur le procédé de gestion de progression selon la revendication 11.

## Fig. 1

# *Fig. 2*

## Fig. 3

8

MANAGER TERMINAL

82

OPERATION
I/F

80

CONTROLLER

84

DEVICE
I/F

83

DISPLAY

85

NETWORK
I/F

81a

STORAGE

81b

TEMPORARY
STORAGE

81

# Fig. 4

FROM
CAMERA 2

FROM
FACILITY 5

FROM
WORKSITE SERVER 9

7

ANALYSIS
SERVER

603

OPERATOR DATA
GENERATOR

601

PROCESS LOG
DATA GENERATOR

910

TASK PLAN DB

D3

613

OPERATOR DB

D1

611

PROCESS DB

D1, D2

602

PROCESS STATE
DATA GENERATOR

604

OPERATOR COUNT
ESTIMATOR

717

MEASURE
OPTION DB

701

SIMULATOR

751

NOTIFIER

8

MANAGER TERMINAL

D8

861

PRESENTATION
INTERFACE

## Fig. 5A

D1

| PROCESS LOG DATA | | | | | | |
|---|---|---|---|---|---|---|
| DATE AND TIME | PASSING PRODUCT | WORK LINE | FACILITY | LOT ID | PASSING COUNT | OPERATING STATE |
| 2021.0801.0701.27 | A | 2 | 6 | 143 | 201 | STOPPED |
| 2021.0801.0706.40 | A | 2 | 4 | 143 | 202 | NORMAL |
| 2021.0801.0706.40 | B | 1 | 2 | 211 | 1 | STOPPED |
| 2021.0801.0707.07 | A | 2 | 5 | 143 | 202 | NORMAL |
| 2021.0801.0707.43 | A | 2 | 6 | 143 | 202 | NORMAL |
| 2021.0801.0707.52 | B | 1 | 3 | 211 | 1 | STOPPED |
| ... | ... | ... | ... | ... | ... | ... |

## Fig. 5B

D2

| PROCESS STATE DATA | | | | | |
|---|---|---|---|---|---|
| WORK LINE | START TIME | END TIME | FACILITY STATE | PASSING PRODUCT | LOT ID |
| 1 | 2021.0801.0706.40 | 2021.0801.0721.14 | QUALITY CHECK | A | 211 |
| 1 | 2021.0801.0721.14 | 2021.0801.0835.21 | PRODUCTION | A | 211 |
| 1 | 2021.0801.0835.21 | 2021.0801.0913.25 | SWITCHING | B | 212 |
| 1 | 2021.0801.0913.25 | 2021.0801.0930.39 | QUALITY CHECK | B | 212 |
| 1 | 2021.0801.0930.39 | 2021.0801.1032.10 | PRODUCTION | B | 212 |
| 1 | 2021.0801.1032.10 | 2021.0801.1113.17 | SWITCHING | C | 207 |
| ... | ... | ... | ... | ... | ... |

## Fig. 5C

D3

| OPERATOR DATA | | | |
|---|---|---|---|
| START TIME | END TIME | OPERATOR | WORK AREA |
| 2021.0801.0700.00 | 2021.0801.0700.07 | W1 | FACILITY 1 |
| 2021.0801.0736.32 | 2021.0801.0736.40 | W2 | FACILITY 2 |
| 2021.0801.0736.42 | 2021.0801.0736.54 | W3 | FACILITY 3 |
| ... | ... | ... | ... |

## Fig. 6A

PRODUCTION QUANTITY

Gp

Gs

Gh

t0    tp    TIME

## Fig. 6B

PRODUCTION QUANTITY

G0

Gp

Gh

t0    tp    TIME

## Fig. 6C

PRODUCTION QUANTITY

D8

Gp

Gd

Gs

Gh    t0    td    tp    TIME

## Fig. 7

START

S11 | ACQUIRE PROCESS LOG DATA, PROCESS STATE DATA, AND ESTIMATED OPERATOR COUNT

S12 | PERFORM PROGRESS SIMULATION

S13 | IS PROGRESS DELAYED COMPARED WITH TASK PLAN?

NO

YES

S14 | IDENTIFY MEASURE CAPABLE OF IMPROVING DELAY WHEN APPLIED AT CURRENT TIME

S15 | MULTIPLE PROGRESS SIMULATIONS TO OBTAIN APPLICATION DEADLINE

S16 | TRANSMIT DELAY NOTIFICATION AND PRESENTATION DATA TO MANAGER TERMINAL

END

31

## Fig. 8

6a

6b

MANUFACTURING SYSTEM

FACILITY STOP/RECOVERY SYSTEM

SWITCHING

PRODUCTION

FIRST

SECOND

MTTR

THIRD

FOURTH

MTTR

FIFTH

SIXTH

M-TH

PRODUCTION COMPLETED

FACILITY FAILURE

MTBF
(MEAN TIME
BETWEEN FAILURE)

FACILITY FAILURE

MTBF
(MEAN TIME
BETWEEN FAILURE)

FACILITY FAILURE

# Fig. 9

```
        ┌────────────────────────────────────────────┐
        │  MULTIPLE PROGRESS SIMULATIONS TO          │
        │  OBTAIN APPLICATION DEADLINE (S15)         │
        └────────────────────────────────────────────┘
```

S21 — CALCULATE ESTIMATED COMPLETION TIME WITH APPLYING MEASURE N-MINUTES AFTER CURRENT TIME

S22 — IS ESTIMATED COMPLETION TIME EARLIER THAN PLANED COMPLETION TIME?

YES

NO

S23 — INCREMENT N

S24 — SET CANDIDATE TIMES AS TIMES NEAR N-MINUTES LATER

S25 — PERFORM PROGRESS SIMULATION APPLYING MEASURE AT EACH CANDIDATE TIME

S26 — DETERMINE, AS APPLICATION DEADLINE, CANDIDATE TIME WITH MINIMUM DIFFERENCE BETWEEN ESTIMATED COMPLETION TIME AND PLANED COMPLETION TIME

RETURN (TO S16)

## Fig. 10A

| | PRODUCTION A x 100 | SWITCHING A→B | PRODUCTION B x 60 | SWITCHING B→C | PRODUCTION C x 150 |
|---|---|---|---|---|---|
| | 1 MIN. x 100 = 100 MIN. | 40 MIN. / 2 OPERATORS = 20 MIN. | 2 MIN. x 60 = 120 MIN. | 50 MIN. / 2 OPERATORS = 25 MIN. | 1 MIN. x 150 = 150 MIN. |

t0 t1    TIME    L1

PERIOD TO ESTIMATED COMPLETION TIME = 100 + 20 + 120 + 25 + 150 = 415 (MIN.)

## Fig. 10B

| | PRODUCTION A x 100 | SWITCHING A→B | PRODUCTION B x 60 | SWITCHING B→C | PRODUCTION C x 150 |
|---|---|---|---|---|---|
| | 1 MIN. x 100 = 100 MIN. | 40 MIN. / 1 OPERATOR = 40 MIN. | 2 MIN. x 60 = 120 MIN. | 50 MIN. / 2 OPERATORS = 25 MIN. | 1 MIN. x 150 = 150 MIN. |

t0    tn    TIME    L1

PERIOD TO ESTIMATED COMPLETION TIME = 100 + 40 + 120 + 25 + 150 = 435 (MIN.)

## Fig. 11

```
                    ┌──────────────┐
                    │    START     │
                    └──────┬───────┘
                           │
                           ▼
                          ╱╲
        S31             ╱    ╲
              ╱─────────────────────╲
             ╱   IS PRESENTATION DATA ╲────────┐
             ╲       RECEIVED ?       ╱   NO    │
              ╲─────────────────────╱           │
                      │ YES                     │
                      ▼                         │
        ┌─────────────────────────────┐         │
   S32  │  DISPLAY SIMULATION RESULT AND│        │
        │     APPLICATION DEADLINE     │         │
        └──────────────┬──────────────┘         │
                       │                         │
                       ▼                         │
                      ╱╲                         │
        S33         ╱    ╲                       │
              ╱─────────────────────╲            │
             ╱  IS DETERMINATION     ╲───────────┘
             ╲  OPERATION OF MEASURE ╱   NO
              ╲     INPUT ?         ╱
               ╲─────────────────╱
                      │ YES
                      ▼
   ┌──────────────────────────────────────┐
S34│  TRANSMIT INSTRUCTION ACCORDING TO    │
   │ DETERMINED MEASURE TO WORKSITE SERVER │
   └──────────────────┬───────────────────┘
                      │
                      ▼
              ┌──────────────┐
              │     END      │
              └──────────────┘
```

## Fig. 12

*Fig.13*

OPERATOR
COUNT

2

1

0

T1

ts     ta                                te

TIME

## Fig. 14

```
        ┌─────────────┐
        (    START    )
        └─────────────┘
               │
  ┌──────────────────────────────────────────┐
  │  ACQUIRE PAST PROCESS STATE DATA AND      │
S101  │          OPERATOR DATA                │
  └──────────────────────────────────────────┘
               │
  ┌──────────────────────────────────────────┐
  │ CALCULATE TASK UNPERFORMED PERIOD, BASED  │
S102 │ ON PROCESS STATE DATA AND OPERATOR DATA │
  └──────────────────────────────────────────┘
               │
  ┌──────────────────────────────────────────┐
  │     STORE, IN TASK TENDENCY DB, DATA OF   │
S103 │   CALCULATED TASK UNPERFORMED PERIOD    │
  └──────────────────────────────────────────┘
               │
        ┌─────────────┐
        (     END     )
        └─────────────┘
```

## Fig. 15

FROM CAMERA 2     FROM FACILITY 5     FROM WORKSITE SERVER 9

ANALYSIS SERVER — 7

- 603 OPERATOR DATA GENERATOR
- 601 PROCESS LOG DATA GENERATOR
- 910 TASK PLAN DB

D3 — 613 OPERATOR DB

D1 — 611 PROCESS DB

602 PROCESS STATE DATA GENERATOR

D1, D2

604 OPERATOR COUNT ESTIMATOR

702B TASK TENDENCY ANALYZER

715 TASK TENDENCY DB

717 MEASURE OPTION DB

701B SIMULATOR

751 NOTIFIER

MANAGER TERMINAL — 8

D8 — 861 PRESENTATION INTERFACE

## Fig. 16

STANDARD TASK PERIOD Tu = T1*0 + T2*1 + T3*2 + T4*1 + T5*0 + T6*1

# *Fig. 17*

START

S101 | ACQUIRE PAST PROCESS STATE DATA AND OPERATOR DATA

S102 | CALCULATE TASK UNPERFORMED PERIOD, BASED ON PROCESS STATE DATA AND OPERATOR DATA

S103 | STORE, IN TASK TENDENCY DB, DATA OF CALCULATED TASK UNPERFORMED PERIOD

S104 | CALCULATE STANDARD TASK PERIOD, BASED ON PROCESS STATE DATA AND OPERATOR DATA

S105 | STORE, IN TASK TENDENCY DB, DATA OF CALCULATED STANDARD TASK PERIOD

END

Fig. 18

PRODUCTION
QUANTITY

G1

Gs

Gh

t0                                                    tp

TIME

**REFERENCES CITED IN THE DESCRIPTION**

**Patent documents cited in the description**

- WO 2020217381 A
- US 2020193337 A1